(19) Europäisches Patentamt
European Patent Office
Office européen des brevets

(11) EP 3 720 674 B1

(12) EUROPÄISCHE PATENTSCHRIFT

(45) Veröffentlichungstag und Bekanntmachung des Hinweises auf die Patenterteilung:
**17.02.2021 Patentblatt 2021/07**

(21) Anmeldenummer: **19712617.0**

(22) Anmeldetag: **28.03.2019**

(51) Int Cl.:
***B29C 43/22*** (2006.01) ***B29C 43/34*** (2006.01)
***B29C 43/00*** (2006.01) ***C09D 4/06*** (2006.01)
***C09D 133/12*** (2006.01) ***B29C 59/04*** (2006.01)
***B29C 43/46*** (2006.01) ***B44C 1/24*** (2006.01)
*B29C 35/10* (2006.01) *B29L 31/00* (2006.01)
*B29L 7/00* (2006.01) *B29C 35/08* (2006.01)
*B29K 667/00* (2006.01) *B44B 5/02* (2006.01)

(86) Internationale Anmeldenummer:
**PCT/EP2019/057923**

(87) Internationale Veröffentlichungsnummer:
**WO 2019/185833 (03.10.2019 Gazette 2019/40)**

(54) **VERFAHREN ZUR ÜBERTRAGUNG EINER PRÄGESTRUKTUR AUF DIE OBERFLÄCHE EINER BESCHICHTUNG UND VERBUND ENTHALTEND DIESE BESCHICHTUNG**

METHOD FOR TRANSFERRING AN EMBOSSING STRUCTURE TO THE SURFACE OF A COATING AND COMPOUND CONTAINING THIS COATING

PROCÉDÉ DE TRANSFERT D'UNE STRUCTURE GAUFRÉE VERS LA SURFACE D'UN REVÊTEMENT ET COMPOSITE COMPRENANT LEDIT REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 EP 18164689**

(43) Veröffentlichungstag der Anmeldung:
**14.10.2020 Patentblatt 2020/42**

(73) Patentinhaber: **BASF Coatings GmbH**
**48165 Münster (DE)**

(72) Erfinder:
- **KUES, Jan-Bernd**
  **48165 Münster (DE)**
- **PIONTEK, Susanne**
  **48165 Münster (DE)**
- **EXNER, Joerg**
  **48165 Münster (DE)**
- **LENZ, Joerg**
  **48165 Münster (DE)**
- **KLEINE-BLEY, Birgit**
  **48165 Münster (DE)**
- **SCHIPPER, Wilfried**
  **44263 Dortmund (DE)**
- **VON DER AA, Robert**
  **04451 Borsdorf/OT Panitzsch (DE)**
- **BERGMANN, Frank**
  **06114 Halle (DE)**
- **LORENZ, Michael**
  **04155 Leipzig (DE)**
- **KRABBENBORG, Sven, Olle**
  **48165 Münster (DE)**
- **DUENNEWALD, Joerg**
  **48165 Münster (DE)**

(74) Vertreter: **BASF IP Association**
**BASF SE**
**GBI-C006**
**67056 Ludwigshafen (DE)**

(56) Entgegenhaltungen:
**EP-B1- 2 146 805**
**US-A1- 2015 166 704**
**US-A1- 2016 082 688**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **MARKUS LEITGEB ET AL: "Multilength Scale Patterning of Functional Layers by Roll-to-Roll Ultraviolet-Light-Assisted Nanoimprint Lithography", ACS NANO, Bd. 10, Nr. 5, 29. März 2016 (2016-03-29), Seiten 4926-4941, XP055477172, US ISSN: 1936-0851, DOI: 10.1021/acsnano.5b07411 in der Anmeldung erwähnt**

## Beschreibung

Die vorliegende Erfindung betrifft ein Verfahren zur Übertragung einer Prägestruktur auf wenigstens einen Teil einer Oberfläche einer Beschichtung (B2) unter Einsatz eines Verbunds (F1B1) aus einem Substrat (F1) und einer zumindest teilweise geprägten und zumindest teilweise ausgehärteten Beschichtung (B1), wobei die Beschichtung (B2) und die Beschichtung (B1) des Verbunds (F1B1) zueinander spiegelbildliche Prägestrukturen aufweisen, wobei das Verfahren wenigstens die Schritte (1) und (2) sowie gegebenenfalls (3) umfasst, einen Verbund (B2B1F1) sowie eine Verwendung dieses Verbunds zur Herstellung einer zumindest teilweise geprägten Beschichtung (B2) in Form eines freien Films oder eines Verbunds (B2KF2) aus einem Substrat (F2), wenigstens eines Klebstoffs (K) und der Beschichtung (B2).

## Stand der Technik

Es ist in der Technik heute in vielen Anwendungen üblich, Werkstücke auf ihrer Oberfläche mit Strukturen zu versehen, deren strukturelle Ausprägungen sich im Mikrometer- oder sogar im Nanometer-Bereich bewegen. Derartige Strukturen werden auch als Mikrostrukturen (Strukturen mit Ausprägungen im Mikrometerbereich) oder Nanostrukturen (Strukturen mit Ausprägungen im Nanometerbereich) bezeichnet. Derartige Strukturen werden z.B. eingesetzt, um Werkstoffoberflächen hinsichtlich optischer, bionischer und/oder haptischer Eigenschaften zu beeinflussen. Solche Strukturen werden auch als Prägungen oder Prägestrukturen bezeichnet.

Eine gängige Methode ist es dabei, diese Strukturen in einen Lack zu übertragen. Die Übertragung der Strukturen in den Lack wird hierbei häufig mit einem Prägevorgang erreicht, bei dem eine Matrize, die auf einer Prägeoberfläche bzw. Übertragungsoberfläche die auszubildenden Mikro- und/oder Nanostrukturen in einer Negativform enthält, mit dem Lack in Kontakt gebracht und in diesen eingedrückt wird. Um die Strukturen dann auf der Oberfläche des Werkstückes dauerhaft auszubilden und zu erhalten, wird der Lack typischerweise *in situ* gehärtet.

Der Nachteil bei diesen aus dem Stand der Technik bekannten Verfahren ist jedoch, dass kontinuierliche Verfahren mit hoher Abformgenauigkeit in einem breiten Größenbereich wie Rolle-zu-Rolle- oder Rolle-zu-Platte-Prozesse nur für die Prägung von Folien (Metallen, Kunststoff, Papier) oder Platten (Metall, Kunststoff, Glas) in Frage kommen. Sobald eine nicht vollkommen planare Oberfläche vorliegt oder die Bauteile zu groß für die einzusetzende Prägemaschine sind, können die bekannten Verfahren nicht zur Strukturierung der Bauteiloberfläche eingesetzt werden. Aus dem Stand der Technik bekannte *in-mould*-Verfahren zur Lösung dieses Problems, bei denen das jeweilige Bauteilmaterial, wie z.B. flüssiges Kunststoffgranulat, in eine strukturierte Form eingelassen und ausgehärtet wird und nach der Aushärtung die Bauteiloberfläche das Positiv der Matrize der Werkzeugoberfläche trägt, sind jedoch nachteilig, weil es sich bei diesem Verfahren um diskontinuierliche Prozesse handelt, Einschränkungen bei der Matrize mit der Negativstruktur vorliegen, zum Entfernen des Bauteils aus dem Werkezeug Trennmittel benötigt werden und die Abformgenauigkeit besonders bei periodischen Strukturen mit Aspektverhältnissen >0,5 sehr gering ist.

Da die direkten Prägeverfahren wie oben beschrieben für große Bauteile wie z.B. Flugzeugflügel, Flügel einer Windkraftanlage oder Fassadenelemente nicht genutzt werden können, wird hier häufig versucht, das Bauteil mit einer Folie, die auf ihrer Oberfläche eine Nanometer oder Mikrometerstruktur hat, zu laminieren bzw. verkleben. Das Laminieren von Folien bringt jedoch viele Nachteile mit sich, da Folien schnell dazu tendieren zu vergilben, wodurch das optische Erscheinungsbild der Oberfläche stark beeinträchtigt wird, das Gewicht des Bauteils durch die Verwendung einer Folie als Trägermaterial erhöht wird, welches vor allem im Leichtbau ein Nachteil ist und Folien eine größere Barriere z.B. gegen Luftsauerstoff und Flüssigen darstellen. Letzteres ist vor allem hinderlich bei Reparaturprozessen, bei denen bestimmte Flüssigkeiten eingesetzt werden, um das Bauteil von den alten Beschichtungsstoffen zu reinigen. Eine höhere Barriere gegen Luftsauerstoff kann vor allem bei Fassadenelemente Schimmelbildung hervorzurufen.

EP 1 304 235 A1 beschreibt ein Verfahren zum Erzeugen einer strukturierten Lackschicht mittels einer Trägerfolie, bei dem ein Schichtverbund bestehend aus einer strukturierten Trägerfolie mit Release-Eigenschaften und einer Lackschicht hergestellt wird. In der DE 10 2005 017 170 A1 wird eine Transferfolie beschrieben, die eine Trägerfolie und eine darauf angeordnete Strukturschicht umfasst. Nach Aushärten der Strukturschicht kann diese auf die mit einer Struktur zu versehende Zieloberfläche verklebt werden. US 2007/0218255 A1 beschreibt ein Verfahren zur Herstellung einer strukturierten Folie, die zur Dekoration von Glas eingesetzt werden kann.

US 2010/0279075 A1 beschreibt ein Verfahren zur Erzeugung von mikrostrukturierten Oberfläche auf einem Bauteil mittels Einsatzes einer strukturierten Trägerfolie. Nachteilig an dem Verfahren ist jedoch, dass die mikrostrukturierte Folie vor der Applikation der Strukturschicht zunächst mit einer Release-Schicht überzogen wird. Hierdurch wird ein zusätzlicher Arbeitsschritt erforderlich und zudem die Abformqualität stark negativ beeinflusst. Eine exakte, komplementäre Übertragung der Mikrostruktur ist nicht möglich, da der Abstand zwischen den einzelnen Strukturelementen der Prägung durch die Release-Schicht nachteilig reduziert wird.

WO 2015/154866 A1 betrifft ein Verfahren zum Herstellung eines Substrats mit strukturierter Oberfläche. Dabei wird zunächst eine erste UV-härtende Beschichtung auf das Substrat aufgebracht und diese gehärtet. Auf diese ausgehärtete Beschichtung wird dann als Prägelack eine zweite UV-härtende Beschichtung aufgebracht, diese zwecks Generierung einer Mikrostruktur geprägt und im Anschluss ausgehärtet.

DE 10 2007 062 123 A1 beschreibt ein Verfahren zum Aufbringen eines Prägelacks wie beispielswiese eines durch UV-Strahlung vernetzbaren Prägelacks auf eine Trägerfolie, Strukturierung des Prägelacks im Mikrometerbereich sowie Härten des auf der Folie aufgebrachten Prägelack unter Erhalt einer geprägten Folie, deren Mikrostruktur im Anschluss durch Abscheiden eines Metall auf der geprägten Oberfläche, d.h. durch Metallisierung der Folie, abgeformt wird. Nachteilig an solchen Abformungen durch eine anschließende Metallisierung ist jedoch eine dadurch bedingte unerwünschte Herabsetzung der Abformqualität.

US 2016/082688 A1 beschreibt eine auf einem Substrat befindliche Mehrschichtlackierung, deren oberste Schicht eine Strukturierung aufweist, sowie ein Verfahren zur Herstellung dieser Mehrschichtlackierung. Aus US 2015/166704 A1 ist eine Mikrostrukturen aufweisende ausgehärtete Beschichtung auf einem Substrat bekannt, die kratzbeständig ist.

Schließlich wird in EP 2 146 805 B1 ein Verfahren zur Herstellung eines Materials mit einer texturierten Oberfläche beschrieben. Das Verfahren sieht dabei vor, ein Substrat mit einer aushärtbaren Beschichtung zu versehen, diese zwecks Prägung mit einem Texturiermedium in Kontakt zu bringen, und die dann auf diese Weise geprägte Beschichtung auszuhärten und von dem Texturiermedium zu entfernen. Das Texturiermedium weist eine Oberflächenschicht auf, die 20 bis 50% eines Acryl-Oligomeren, 15 bis 35% eines monofunktionalen Monomers und 20 bis 50% eines multifunktionalen Monomers umfasst. In der WO 2016/090395 A1 und im ACS Nano Journal, 2016, 10, Seiten 4926 bis 4941 werden ähnliche Verfahren beschrieben, wobei jeweils explizit gelehrt wird, dass zur Herstellung der Oberflächenschicht des Texturiermediums jeweils große Teile 3-fach ethoxyliertes Trimethylolpropantriacrylat ($TMP(EO)_3TA$) eingesetzt werden sollten, um eine vergleichsweise harte Matrize des Texturiermediums erzeugen zu können. Das zur Herstellung der Oberflächenschicht eingesetzte Beschichtungsmittel muss gemäß der WO 2016/090395 A1 zudem zwingend einen Baustein enthalten, der wenigstens zwei Thiol-Gruppen aufweist wie zum Beispiel Trimethylolpropantris(3-mercaptopropionat). Der Einsatz solcher Thiole in entsprechenden Beschichtungsmittelzusammensetzungen ist jedoch oftmals nachteilig, da solche Zusammensetzungen nicht immer eine ausreichende Lagerstabilität aufweisen und daraus hergestellte Beschichtungen nicht in ausreichendem Maße bewitterungsstabil sind. Dazu kommt noch eine durch den Einsatz der Thiole hervorgerufene Geruchsbelästigung, die natürlich ebenfalls nicht wünschenswert ist.

Die aus dem Stand der Technik bekannten Prägeverfahren wie insbesondere die in EP 2 146 805 B1, WO 2016/090395 A1 und ACS Nano Journal, 2016, 10, Seiten 4926 bis 4941 beschriebenen Verfahren sind nicht immer in ausreichendem Maße dazu geeignet, Prägungen insbesondere im Mikrometerbereich und/oder im Nanometerbereich, d.h. Mikro- und/oder Nanostrukturen, zu übertragen, insbesondere nicht, ohne bei einer solchen Übertragung die Abformgenauigkeit in einem inakzeptablen Maß herabzusetzen. Zudem sind die aus dem Stand der Technik bekannten Verfahren wie vorstehend ausgeführt nicht immer dazu geeignet, insbesondere große Bauteile bzw. Bauteile mit einer nicht-planaren Geometrie mit einem nano- und/oder mikrostrukturierten, Lackfilm zu versehen, der sich zudem noch durch eine ausreichende Bewitterungsstabilität auszeichnet und dessen optisches Erscheinungsbild daher nicht negativ beeinflusst wird. Gleichzeitig werden die Prägungen nicht immer in ausreichendem Maße repliziert.

Es besteht daher ein Bedarf an einem Verfahren zur Übertragung von Prägestrukturen, das die vorgenannten Nachteile nicht aufweist.

## Aufgabe

Eine Aufgabe der vorliegenden Erfindung ist es daher, ein Verfahren zur Übertragung von Prägestrukturen auf Beschichtungen zur Verfügung zu stellen, welches es ermöglicht, Prägestrukturen wie insbesondere Mikro- und/oder Nanostrukturen mit einer ausreichenden Abformgenauigkeit übertragen zu können und welches insbesondere die Erzeugung einer möglichst wiederverwertbaren Prägematrize zur Übertragung der Prägestrukturen ermöglicht bzw. unter Einsatz einer solchen Prägematrize durchgeführt werden kann. Zudem ist es einer Aufgabe der vorliegenden Erfindung, ein solches Verfahren bereit zu stellen, welches es ermöglicht, insbesondere auch große Bauteile bzw. Bauteile mit einer nicht-planaren Geometrie mit einer eine solche Prägestruktur aufweisenden Beschichtung zu versehen, die sich zudem noch durch eine ausreichende Bewitterungsstabilität auszeichnet und deren optisches, bionisches und/oder haptisches Erscheinungsbild daher nicht negativ beeinflusst wird. Gleichzeitig sollen jeweils die zu übertragenden Prägestrukturen in möglichst hohem Maße repliziert werden können und das Verfahren insbesondere keine durch unerwünschte oder nicht ausreichende Eigenschaften der eingesetzten Beschichtungsmittel und Beschichtungen wie beispielsweise einer nicht ausreichenden Haftung hervorgerufenen Nachteile aufweisen.

## Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Verfahren zur Übertragung einer Prägestruktur gemäß Anspruch 1.

Es wurde überraschend gefunden, dass es das erfindungsgemäße Verfahren ermöglicht, Prägestrukturen, insbesondere Mikro- und/oder Nanostrukturen, in einer sehr hohen Abformgenauigkeit auf die Beschichtung (B2) zu übertragen, so dass bei der Prägung keine Modulationstiefe verloren geht, insbesondere in einer hohen Abformgenauigkeit in einem Bereich von 10 nm bis 1000 μm Strukturbreite und in einem Bereich von 0,1 nm bis 1000 μm Strukturtiefe. Es wurde in diesem Zusammenhang insbesondere überraschend gefunden, dass es das erfindungsgemäße Verfahren ermöglicht, mit einem Verbund (F1B1), der durch Beschichten eines strahlenhärtbaren Beschichtungsmittels (B1a) auf ein Substrat (F1) erhältlich ist, Prägestrukturen mit einer sehr hohen Abformgenauigkeit und einem hohem Erfolg der Replikation zu übertragen.

Ferner wurde überraschend gefunden, dass das erfindungsgemäße Verfahren deswegen so vorteilhaft angewendet werden kann, da die Beschichtung (B1) des eingesetzten Verbunds (F1B1), der durch Beschichten eines strahlenhärtbaren Beschichtungsmittels (B1a) auf ein vorzugsweise bewegtes Substrat (F1) erhältlich ist, sich durch einen hohen Doppelbindungsumsatz auszeichnet. Dadurch wird eine gute Trennung der Beschichtung (B2) vom Verbund innerhalb von Schritt (3) des erfindungsgemäßen Verfahrens ermöglicht. Zudem wurde überraschend gefunden, dass das erfindungsgemäße Verfahren deswegen so vorteilhaft angewendet werden kann, da die Beschichtung (B1) auf dem Substrat (F1) sich durch eine sehr gute Haftung auszeichnet.

Zudem wurde überraschend gefunden, dass es das erfindungsgemäße Verfahren ermöglicht, insbesondere auch große Bauteile bzw. Bauteile mit einer nicht-planaren Geometrie mit einer eine solche Prägestruktur aufweisenden Beschichtung zu versehen bzw. eine solche Prägestruktur aufweisende Beschichtung auf sie zu übertragen. Ferner wurde überraschend gefunden, dass sich die so erhaltenen mit einer solchen Prägestruktur versehenden Beschichtungen (B2) durch eine ausreichende Bewitterungsstabilität auszeichnen und deren optisches, bionisches und/oder haptisches Erscheinungsbild daher nicht negativ beeinflusst wird. Darüber hinaus ermöglicht es das erfindungsgemäße Verfahren, die eine solche Prägestruktur aufweisenden Beschichtungen (B2) direkt auf solche Substrate wie große Bauteile bzw. Bauteile mit einer nicht-planaren Geometrie aufzubringen oder darauf zu verkleben, ohne dass dabei zwischen Substrat und Beschichtung noch eine oder mehrere weitere Schicht(en) oder gegebenenfalls eine beschichtete Folie vorliegen muss oder müssen.

Zudem wurde überraschend gefunden, dass - wenn es sich bei dem in Schritt (1) eingesetzten Beschichtungsmittel (B2a) um ein strahlenhärtbares wie ein durch UV-Strahlung härtbares Beschichtungsmittel handelt - dieses in Schritt (2) auch bei schnellen Prozessgeschwindigkeiten zumindest teilweise oder vollständig aushärtet, obwohl die UV-Strahlung zur Härtung durch den Verbund (F1B1), der beispielswiese eine 125 μm dicke PET-Folie (F1) und eine bis zu 150 μm dicke Beschichtung (B1) darstellen kann, dringen muss. Ferner ist es überraschend, dass sich in Schritt (3) des Verfahrens die Beschichtung (B2) in einfacher Weise von dem Verbund (F1B1) abtrennen lässt. Insbesondere ist es überraschend, dass diese gute Trennwirkung gegenüber jeder herkömmlichen strahlengehärteten Beschichtung (B2) durch die spezielle Komposition der zumindest teilweise ausgehärteten Beschichtung (B1) erzielt wird.

Zudem wurde überraschend gefunden, dass - wenn es sich bei dem in Schritt (1) eingesetzten Beschichtungsmittel (B2a) um ein physikalisch trocknendes, thermisch härtbares und/oder chemisch härtbares Beschichtungsmittel handelt - die Prägestruktur des Beschichtung (B1) bei Applizieren von (B2a) in Schritt (1) in einer guten Abformgenauigkeit übertragen wird, obwohl in diesem Fall durch das Verdampfen des in (B2a) in diesen Fällen üblicherweise enthaltenen Lösemittels, ein hoher Schrumpf zu erwarten ist, wodurch üblicherweise eine schlechtere Abformgenauigkeit resultiert. Dies wurde jedoch überraschenderweise vorliegend nicht gefunden. Ferner ist es auch in diesem Fall überraschend, dass sich im optionalen Schritt (3) des Verfahrens die Beschichtung (B2) in einfacher Weise von dem Verbund (F1B1) abtrennen lässt. Insbesondere ist es überraschend, dass diese gute Trennwirkung gegenüber jeder herkömmlichen physikalisch getrockneten, thermisch gehärteten und/oder chemisch gehärteten Beschichtung (B2) durch die spezielle Komposition der zumindest teilweise ausgehärteten Beschichtung (B1) erzielt wird.

Ferner wurde überraschend gefunden, dass der innerhalb des erfindungsgemäßen Verfahrens in Schritt (1) einsetzbare Verbund (F1B1) zur Übertragung der Prägestrukturen wie Mikro- und/oder Nanostrukturen wiederverwertbar ist, was aus ökonomischen Gründen vorteilhaft ist. Zudem ist der Verbund (F1B1) überraschenderweise nicht nur wiederverwertbar und damit mehrfach nutzbar, sondern lässt sich zudem kostengünstig und schnell im großindustriellen Maßstab produzieren.

Ein weiterer Gegenstand der vorliegenden Erfindung ist zudem ein Verbund (B2B1F1) gemäß Anspruch 12.

Vorzugsweise wird dieser Verbund durch die Verfahrensschritte (1) und (2) erhalten.

Ein weiterer Gegenstand der vorliegenden Erfindung ist zudem eine Verwendung des erfindungsgemäßen Verbunds (B2B1F1) gemäß Anspruch 15.

Der Verbund (B2KF2) wird dabei vorzugsweise mittels Durchlaufen der Verfahrensstufen (3a), (3b) und (3c) erhalten, nämlich durch

(3a) Applizieren eines Klebstoffs (K) auf wenigstens einen Teil der Oberfläche des Verbunds (B2B1F1) auf seiner

die Beschichtung (B2) aufweisenden Seite unter Erhalt eines Verbunds (KB2B1 F1),

(3b) Aufbringen eines Substrats (F2) auf den nach Stufe (3a) erhaltenen Verbund (KB2B1F1) auf wenigstens einen Teil seiner den Klebstoff (K) aufweisenden Oberfläche oder umgekehrt unter Erhalt eines Verbunds (F2KB2B1F1) und

(3c) Abziehen des Verbunds (B1F1) von dem Verbund (F2KB2B1F1) unter Erhalt eines Verbunds (F2KB2), wobei die Beschichtung (B2) dieses Verbunds auf ihrer Oberfläche zumindest teilweise das Spiegelbild der zumindest teilweise geprägten Oberfläche der Beschichtung (B1) des Verbunds (B1F1) aufweist.

## Ausführliche Beschreibung

Der Begriff "umfassend" im Sinne der vorliegenden Erfindung im Zusammenhang mit den erfindungsgemäß eingesetzten Beschichtungsmitteln wie beispielsweise dem Beschichtungsmittel (B1a) und dem erfindungsgemäßen Verfahren und dessen Verfahrensschritten hat vorzugsweise die Bedeutung "bestehend aus". Dabei können beispielsweise hinsichtlich des erfindungsgemäß eingesetzten Beschichtungsmittels (B1a) - neben den Komponenten (a) und (b) sowie (c) gegebenenfalls (d) - zudem eine oder mehrere der weiteren nachstehend genannten optional in dem erfindungsgemäß eingesetzten Beschichtungsmittel (B1a) enthaltenen Komponenten in diesem enthalten sein. Alle Komponenten können dabei jeweils in ihren nachstehend genannten bevorzugten Ausführungsformen vorliegen. Hinsichtlich des erfindungsgemäßen Verfahrens kann dieses dabei neben den Schritten (1) und (2) sowie optional (3) weitere optionale Verfahrensschritte aufweisen wie zum Beispiel die Schritte (3a), (3b) und (3c) und (4) bis (7).

Nachstehend und vorstehend werden die erste Beschichtung B1 auch als Beschichtung (B1), die zweite Beschichtung B2 auch als Beschichtung (B2), das erste Beschichtungsmittel B1a auch als Beschichtungsmittel (B1a), das zweite Beschichtungsmittel B2a auch als Beschichtungsmittel (B2a), das erste Substrat F1 auch als Substrat (F1), das zweite Substrat F2 auch als Substrat (F2), der erste Verbund F1B1 auch als Verbund (F1B1), der zweite Verbund B2aB1F1 auch als Verbund (B2aB1F1), der dritte Verbund B2B1F1 auch als Verbund (B2B1F1), der vierte Verbund B2KF2 auch als Verbund (B2KF2), der fünfte Verbund KB2B1F1 auch als Verbund (KB2B1F1) und der sechste Verbund F2KB2B1F1 auch als Verbund (F2KB2B1F1) bezeichnet. Gleichermaßen werden nachstehend und vorstehend die erste Komponente a) auch als Komponente (a), die zweite Komponente b) auch als Komponente (b), die dritte Komponente c) auch als Komponente (c) und die vierte Komponente d) auch als Komponente (d) bezeichnet. Gleichermaßen werden nachstehend und vorstehend Schritt 1) auch als Schritt (1), Schritt 2) auch als Schritt (2), Schritt 3) auch als Schritt (3), Schritt 4) auch als Schritt (4), Schritt 5) auch als Schritt (5), Schritt 6) auch als Schritt (6) und Schritt 7) auch als Schritt (7) bezeichnet.

*Erfindungsgemäßes Verfahren zur Übertragung einer Prägestruktur umfassend wenigstens die Schritte (1) bis (2) und optional (3)*

Ein erster Gegenstand der vorliegenden Erfindung ist wie vorstehend ausgeführt ein Verfahren zur Übertragung einer Prägestruktur auf wenigstens einen Teil einer Beschichtung (B2) unter Einsatz eines Verbunds (B1F1) aus einem Substrat (F1) und einer zumindest teilweise geprägten und zumindest teilweise ausgehärteten Beschichtung (B1), wobei die Beschichtung (B2) und die Beschichtung (B1) des Verbunds (B1F1) zueinander spiegelbildliche Prägestrukturen aufweisen und wobei das Verfahren wenigstens die Schritte (1) und (2) sowie optional (3) umfasst.

Vorzugsweise ist das erfindungsgemäße Verfahren ein kontinuierliches Verfahren.

Nach Durchführung der Verfahrensschritte (1) bis (3) wird zum einen der in Schritt (1) eingesetzte Verbund (B1F1) wiedererhalten, d.h. zurückgewonnen und kann vorzugsweise wiederverwertet werden, d.h. erneut in dem Verfahren eingesetzt werden. Zum anderen wird die Beschichtung (B2) erhalten, die auf ihrer zuvor innerhalb des Verbunds (F1B1B2) der Beschichtung (B1) zugewandten Oberfläche das Spiegelbild der zumindest teilweise geprägten Oberfläche der Beschichtung (B1) des in Schritt (1) eingesetzten und dann wiedererhaltenen Verbunds (B1F1) aufweist.

(B2) kann dabei gemäß optionalem Schritt(3) als freier Film durch ein Abziehen des Verbunds (B1F1) von der Beschichtung (B2) innerhalb des Verbunds (B2B1F1) oder umgekehrt erhalten werden. Der Verbund (B1F1) wird dabei wiedererhalten.

Vorzugsweise wird die Beschichtung (B2) in Schritt (3) dreistufig durch die Stufen (3a), (3b) und (3c) in Form eines Verbunds (B2KF2) erhalten, nämlich durch

(3a) Applizieren eines Klebstoffs (K) auf wenigstens einen Teil der Oberfläche des Verbunds (B2B1 F1) auf seiner die Beschichtung (B2) aufweisenden Seite unter Erhalt eines Verbunds (KB2B1F1),

(3b) Aufbringen eines Substrats (F2) auf den nach Stufe (3a) erhaltenen Verbund (KB2B1F1) auf wenigstens einen Teil seiner den Klebstoff (K) aufweisenden Oberfläche oder umgekehrt unter Erhalt eines Verbunds (F2KB2B1F1) und

(3c) Abziehen des Verbunds (B1F1) von dem Verbund (F2KB2B1F1) unter Erhalt eines Verbunds (F2KB2), wobei

die Beschichtung (B2) dieses Verbunds auf ihrer Oberfläche zumindest teilweise das Spiegelbild der zumindest teilweise geprägten Oberfläche der Beschichtung (B1) des Verbunds (B1F1) aufweist.

Die Beschichtung (B2) kann dann wiederum als freier Film durch Abziehen vom nach Stufe (3c) erhaltenen Verbund (F2KB2) erhalten werden.

Die Schritte (1) bis (3) des erfindungsgemäßen Verfahrens werden somit zur Herstellung der Beschichtung (B2) durchgeführt, gegebenenfalls vorliegend in Form des Verbunds (F2KB2).

Die gewünschte Prägestruktur wird durch das Applizieren des vorzugsweise strahlenhärtbaren Beschichtungsmittels (B2a) auf wenigstens einen Teil einer zumindest teilweise geprägten Oberfläche eines Verbunds (B1F1) aus einem Substrat (F1) und einer zumindest teilweise geprägten und zumindest teilweise ausgehärteten Beschichtung (B1) gemäß Verfahrensschritt (1) auf das Beschichtungsmittel (B2a) bzw. - nach Durchführung von Schritt (2) - auf die Beschichtung (B2) übertragen.

Unter dem Begriff "Prägung" bzw. unter dem Begriff "Prägen" wird dabei die zumindest teilweise Ausrüstung des Beschichtungsmittels (B2a) nach Schritt (1) bzw. der Beschichtung (B2) nach Schritt (2) an zumindest einem Teil seiner Oberfläche mit einer Prägestruktur bezeichnet. Dabei wird wenigstens ein bestimmtes Areal des Beschichtungsmittels (B2a) bzw. der Beschichtung (B2) mit einer Prägestruktur ausgerüstet. Vorzugsweise wird die gesamte Oberfläche des Beschichtungsmittels (B2a) bzw. der Beschichtung (B2) mit einer Prägestruktur ausgerüstet. Analoges gilt im Zusammenhang mit den Begriffen "Prägung" bzw. "Prägen" hinsichtlich des als Prägematrize in Schritt (1) eingesetzten und zumindest teilweise geprägten Verbunds (B1F1) aus einem Substrat (F1) und einer zumindest teilweise geprägten und zumindest teilweise ausgehärteten Beschichtung (B1), der gemäß den nachfolgend beschriebenen Schritten (4) bis (7) hergestellt werden kann.

Die Prägestrukturen der Verbünde (B1F1) und (B2KF2) und der Beschichtung (B2) beruhen vorzugsweise jeweils unabhängig voneinander auf einem wiederkehrenden und/oder regelmäßig angeordneten Muster. Es kann sich dabei jeweils um eine durchgehende Prägestruktur wie eine durchgehende Rillenstruktur oder um mehrere vorzugsweise wiederkehrende Einzelprägestrukturen handeln. Die jeweiligen Einzelprägestrukturen können dabei vorzugsweise wiederum auf einer Rillenstruktur basieren, welche mehr oder weniger stark ausgeprägte Stege (Prägeerhebungen) aufweist, durch welche die Prägehöhe der Prägestruktur definiert wird. Entsprechend der jeweiligen Geometrie der Stege einer vorzugsweise wiederkehrenden Einzelprägestruktur können sich in der Aufsicht eine Vielzahl jeweils unterschiedlicher, vorzugsweise wiederkehrender Einzelprägestrukturen ergeben, wie z.B. vorzugsweise schlangenlinienförmige, zackenförmige, hexagonale, diamantenförmige, rautenförmige, parallelogrammförmige, wabenförmige, kreisförmige, punktförmige, sternförmige, leinenförmige, netzförmige, mehreckige, vorzugsweise dreieckige, viereckige, besonders bevorzugt rechteckige und quadratische, fünfeckige, sechseckige, siebeneckige und achteckige, drahtförmige, ellipsenförmige, ovale und gitterförmig gestaltete Muster, wobei sich auch wenigstens zwei Muster überlagern können. Die Stege der Einzelprägestrukturen können auch eine Krümmung, d.h. eine konvexe und/oder konkave Struktur aufweisen.

Die jeweilige Prägestruktur kann dabei durch ihre Breite wie die Breite der Stege, also durch ihre Strukturbreite, und durch die Höhe der Prägungen, also durch ihre Strukturhöhe (bzw. Strukturtiefe), beschrieben werden. Die Strukturbreite wie die Breite der Stege kann dabei eine Länge von bis zu einem Zentimeter aufweisen, liegt aber vorzugsweise in einem Bereich von 10 nm bis 1 mm. Die Strukturhöhe liegt vorzugsweise in einem Bereich von 0,1 nm bis 1 mm. Vorzugsweise stellt die jeweilige Prägestruktur jedoch eine Mikro- und/oder Nanostruktur dar. Mikrostrukturen sind dabei Strukturen - sowohl hinsichtlich Strukturbreite als auch Strukturhöhe - mit Ausprägungen im Mikrometerbereich. Nanostrukturen sind dabei Strukturen - sowohl hinsichtlich Strukturbreite als auch Strukturhöhe - mit Ausprägungen im Nanometerbereich. Mikro- und Nanostrukturen sind dabei Strukturen, die eine Strukturbreite im Nanometerbereich und eine Strukturhöhe im Mikrometerbereich oder umgekehrt aufweisen. Die Begriffe Strukturhöhe und Strukturtiefe sind dabei austauschbar.

Vorzugsweise liegt die Strukturbreite der jeweiligen Prägestruktur in einem Bereich von 10 nm bis 500 μm, besonders bevorzugt in einem Bereich von 25 nm bis 400 μm, ganz besonders bevorzugt in einem Bereich von 50 nm bis 250 μm, insbesondere in einem Bereich von 100 nm bis 100 μm. Vorzugsweise liegt die Strukturhöhe der jeweiligen Prägestruktur in einem Bereich von 10 nm bis 500 μm, besonders bevorzugt in einem Bereich von 25 nm bis 400 μm, ganz besonders bevorzugt in einem Bereich von 50 nm bis 300 μm, insbesondere in einem Bereich von 100 nm bis 200 μm. Dies gilt jeweils sowohl für die Prägestruktur des Verbunds (F1B1) als auch des Verbunds (B2KF2) und der Beschichtung (B2).

Die Strukturbreite und Strukturhöhe der jeweiligen Prägestruktur wird dabei gemäß durch eine mechanische Abtastung der Oberfläche bestimmt. Dabei wird die Prägehöhe an mindestens 10 Stellen in einer Linie gleichmäßig über die Bahnbreite der Probe verteilt gemessen, wobei darauf geachtet werden muss, dass das Abtastgerät die Prägestruktur nicht zusammendrückt. Die Bestimmung der Strukturhöhe stellt eine Bestimmung der Abformgenauigkeit dar und erfolgt mittels Rasterkraftmikroskopie gemäß der nachstehend beschriebenen Methode.

*Schritt (1)*

Schritt (1) des erfindungsgemäßen Verfahrens sieht ein Applizieren eines Beschichtungsmittels (B2a) auf wenigstens einen Teil einer zumindest teilweise geprägten Oberfläche eines Verbunds (B1F1) aus einem Substrat (F1) und einer zumindest teilweise geprägten und zumindest teilweise ausgehärteten Beschichtung (B1) unter Erhalt eines Verbunds (B2aB1F1) vor.

Vorzugsweise weist die zumindest teilweise geprägte und zumindest teilweise ausgehärtete Beschichtung (B1) des in Schritt (1) eingesetzten Verbunds (F1B1) Prägungen im Mikro- und/oder Nanometerbereich auf.

Das mittels (B1) zumindest teilweise beschichtete Substrat (F1) stellt ein Trägermaterial für das darauf aufzubringende Beschichtungsmittel (B2a) bzw. die darauf aufzubringende Beschichtung (B2) dar.

Das Substrat (F1) oder - falls ein beschichtetes Substrat eingesetzt wird - die an der Oberfläche des Substrats (F1) befindliche Schicht besteht vorzugsweise aus wenigstens einem thermoplastischen Polymer, insbesondere ausgewählt der Gruppe bestehend aus Polymethyl(meth)acrylaten, Polybutyl(meth)acrylaten, Polyethylenterephthalaten, Polybutylenterephthalaten, Polyvinylidenflouriden, Polyvinylchloriden, Polyestern einschließlich Polycarbonaten und Polyvinylacetat, vorzugsweise Polyestern wie PBT und PET, Polyamiden, Polyolefinen wie Polyethylen, Polypropylen, Polystyrol sowie Polybutadien, Polyacrylnitril, Polyacetal, Polyacrylnitrilethylen-propylendienstyrolcopolymeren (A-EPDM), Polyetherimiden, Phenolharzen, Harnstoffharzen, Melaminharzen, Alkydharzen, Epoxidharzen, Polyurethanen einschließlich TPU, Polyetherketonen, Polyphenylensulfiden, Polyethern, Polyvinylalkoholen und deren Mischungen. Besonders bevorzugte Substrate oder an deren Oberfläche befindliche Schichten sind Polyolefine wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-StyrolCopolymere), sowie deren physikalische Mischungen (Blends). Besonders bevorzugt sind PP, SAN, ABS, ASA sowie Blends von ABS oder ASA mit PA oder PBT oder PC. Ganz besonders bevorzugt ist PET, PBT, PP, PE und Polymethylmethacrylat (PMMA) oder schlagzähmodifiziertes PMMA. Insbesondere bevorzugt wird ein Polyester, am meisten bevorzugt PET als Material für das Substrat (F1) eingesetzt. Alternativ kann das Substrat (F1) selbst - gegebenenfalls trotz einer darauf aufgebrachten Schicht aus wenigstens einem der vorstehend genannten Polymere - aus einem anderen Material wie Glas, Keramik, Metall, Papier und/oder Gewebe gefertigt sein. In diesem Fall stellt das Substrat (F1) vorzugsweise eine Platte dar und kann beispielsweise in einer Rolle-zu-Platte-Prägevorrichtung eingesetzt werden.

Die Dicke des Substrates (F1) beträgt vorzugsweise 2 $\mu$m bis zu 5 mm. Besonders bevorzugt ist eine Schichtdicke von 25 bis 1.000 $\mu$m, insbesondere 50 bis 300 $\mu$m.

Bei dem Substrat (F1) handelt es sich vorzugsweise um eine Folie, besonders bevorzugt um eine Folienbahn, ganz besonders bevorzugt um eine Endlos-Folienbahn. In diesem Fall kann das Substrat (F1) vorzugsweise in einer Rolle-zu-Rolle-Prägevorrichtung eingesetzt werden. Die Dicke der Beschichtung (B1) beträgt vorzugsweise 0,1 bis 500 $\mu$m, besonders bevorzugt 1 bis 300 $\mu$m.

Der Begriff "Endlos-Folie" oder "Endlos-Folienbahn" bezeichnet im Sinne der vorliegenden Erfindung vorzugsweise eine Folie mit einer Länge von 100 m bis 10 km.

Vorzugsweise wird der bei der Durchführung des Schritts (1) eingesetzte Verbund (F1B1) (und vorzugsweise auch bei der Durchführung der Schritte (2) und (3) des Verfahrens) bewegt und ist daher ein bewegter Verbund. Vorzugsweise wird der Verbund (F1B1) während der Durchführung von Schritt (1) mittels einer Transporteinrichtung wie einem Fließband bewegt. Die entsprechende zur Durchführung von Schritt (1) eingesetzte Vorrichtung umfasst daher vorzugsweise eine solche Transporteinrichtung. Die entsprechende zur Durchführung von Schritt (1) eingesetzte Vorrichtung umfasst ferner ein Mittel zum Applizieren des vorzugsweise strahlenhärtbaren Beschichtungsmittels (B2a) auf wenigstens einen Teil einer Oberfläche des Verbunds (F1B1).

Durch Schritt (1) wird die gewünschte vom Verbund (F1B1) zu übertragende (spiegelbildliche) Prägestruktur durch das Applizieren des vorzugsweise strahlenhärtbaren Beschichtungsmittels (B2a) auf wenigstens einen Teil einer zumindest teilweise geprägten Oberfläche eines Verbunds (F1B1) aus einem Substrat (F1) und einer zumindest teilweise geprägten und zumindest teilweise ausgehärteten Beschichtung (B1) auf das Beschichtungsmittel (B2a) bzw. - nach Durchführung von Schritt (2) - auf die Beschichtung (B2) übertragen. Der Verbund (F1B1) fungiert somit nicht nur als Trägermaterial für (B2a) bzw. (B2) sondern zudem als eine Prägematrize.

Vorzugsweise ist der in Schritt (1) als Prägematrize eingesetzte Verbund (F1B1) wiederverwertbar und wiederholt zur Übertragung wenigstens einer Prägestruktur einsetzbar, vorzugsweise innerhalb des erfindungsgemäßen Verfahrens. Vorzugsweise werden durch Schritt (1) Mikro- und/oder Nanostrukturen als Prägestruktur auf das Beschichtungsmittel (B2a) bzw. - nach Durchführung von Schritt (2) - auf die Beschichtung (B2) übertragen.

Vorzugsweise handelt es sich bei dem Verbund (F1B1) um eine Folienbahn (F1), die eine zumindest teilweise geprägte und vollständig ausgehärtete Beschichtung (B1) aufweist. Besonders bevorzugt ist das Substrat (F1) eine Endlos-Folienbahn, die die zumindest teilweise geprägte und zumindest teilweise ausgehärtete Beschichtung (B1) aufweist, wodurch der Verbund (F1B1) eine Endlos-Prägematrize darstellt.

Der als Prägematrize eingesetzte Verbund (F1B1) weist eine "Negativstruktur" ("Negativform") auf, d.h. das Spiegelbild derjenigen Prägestruktur, die in Schritt (1) des erfindungsgemäßen Verfahrens auf das das Beschichtungsmittel (B2a) bzw. - nach Durchführung von Schritt (2) - auf die Beschichtung (B2) übertragen wird.

Die entsprechende zur Durchführung von Schritt (1) eingesetzte Vorrichtung umfasst ein Mittel zum Applizieren eines vorzugsweise strahlenhärtbaren Beschichtungsmittels (B2a) auf wenigstens einen Teil einer zumindest teilweise geprägten Oberfläche eines Verbunds (F1B1) aus einem Substrat (F1) und einer zumindest teilweise geprägten und zumindest teilweise ausgehärteten Beschichtung (B1). Ferner weist die eingesetzte Vorrichtung vorzugsweise ein Mittel wie eine Walze oder ein Rasterwalzwerk umfassend wenigstens eine Walze zum Pressen oder Anpressen des so applizierten Beschichtungsmittels (B2a) auf das vorzugsweise als Endlos-Folienbahn eingesetzte und mit (B1) zumindest teilweise beschichtete Substrat (F1), also den entsprechenden Verbund (F1B1), nach dem Applizieren des strahlenhärtbaren Beschichtungsmittels (B2a) auf, welches vorzugsweise in Förderrichtung des Verbunds (F1B1) gesehen hinter dem Mittel zum Applizieren des strahlenhärtbaren Beschichtungsmittels (B2a) gelegen ist.

Als Mittel zum Pressen oder Anpressen eignet sich wie vorstehend genannt eine Walze oder ein Rasterwalzwerk umfassend wenigstens eine Walze. Das Rasterwalzwerk umfasst dabei vorzugsweise eine metallische Walze, beispielsweise eine Stahlwalze oder eine Nickelwalze, oder aber eine Quarz-basierte Walze oder eine mit wenigstens einem Kunststoff beschichtete Walze.

Der in Schritt (1) eingesetzte Verbund (F1B1) aus Substrat (F1) und zumindest teilweise geprägter und zumindest teilweise ausgehärteter Beschichtung (B1) wird nachfolgend auch als "Mastersubstrat" oder "Masterfilm" bezeichnet. Handelt es sich bei dem Substrat (F1) um eine Folie, wird der entsprechende Masterfilm als "Masterfolie" bezeichnet. Handelt es sich bei dem Substrat (F1) um eine Folienbahn, wird der entsprechende Masterfilm als "Masterfolienbahn" bezeichnet. Die Beschichtung (B1) des Masterfilms wird nachfolgend auch als "zumindest teilweise ausgehärteter Masterlack" oder "Masterlackschicht" und das zur Herstellung des ausgehärteten Masterlacks eingesetzte Beschichtungsmittel (B1a) als "*Masterlack" bezeichnet. Vorzugsweise befindet sich zwischen (F1) und (B1) des Verbunds (F1B1) keine weitere (Lack)schicht. Es ist aber auch möglich, dass zwischen (F1) und (B1) des Verbunds (F1B1) wenigstens eine Haftvermittlerschicht vorhanden ist, die in diesem Fall vorzugsweise durchlässig für UV-Strahlung ist.

Der als Prägematrize eingesetzte Verbund (F1B1) kann optional vor Durchführung des Schrittes (1) mit dem eingesetzten Beschichtungsmittel (B2a) vorbehandelt werden. Ein solche Vorbehandlung umfasst oder ist vorzugsweise ein Benetzen der Prägematrize mit dem Beschichtungsmittel (B2a).

*Schritt (2)*

Schritt (2) des erfindungsgemäßen Verfahrens sieht ein zumindest teilweises Aushärten des applizierten Beschichtungsmittels (B2a) unter Erhalt eines Verbunds (B2B1 F1) aus Substrat (F1), zumindest teilweise geprägter und zumindest teilweise ausgehärteter Beschichtung (B1) und zumindest teilweise ausgehärteter Beschichtung (B2) vor. Der Verbund (B2B1F1) wird nachfolgend auch als "Transfersubstrat" bezeichnet. Wenn (F1) eine Folie ist, ist der Verbund dementsprechend eine Transferfolie.

Vorzugsweise ist während der gesamten Dauer der zumindest teilweisen Aushärtung gemäß Schritt (2) das in Schritt (1) eingesetzte Mittel zum Pressen oder Anpressen des applizierten Beschichtungsmittels (B2a) auf den Verbund (F1B1) mit dem Beschichtungsmittel (B2a) bzw. der sich formenden Beschichtung (B2) in Kontakt.

Vorzugsweise werden die Schritte (1) und (2) somit zeitgleich durchgeführt. Dabei erfolgt die Aushärtung gemäß Schritt (2) während der Durchführung von Schritt (1) vorzugsweise *in situ*, insbesondere wenn als Beschichtungsmittel (B2a) ein strahlenhärtendes Beschichtungsmittel eingesetzt wird. Alternativ und insbesondere, wenn als Beschichtungsmittel (B2a) ein thermisch härtendes und/oder chemisch härtendes Beschichtungsmittel eingesetzt wird, werden die Schritte (1) und (2) zeitlich nacheinander durchgeführt.

Die entsprechende zur Durchführung von Schritt (2) eingesetzte Vorrichtung umfasst daher vorzugsweise wenigstens eine Strahlungsquelle zum Bestrahlen des Beschichtungsmittels (B2a) mit einer Härtungsstrahlung. Da das Beschichtungsmittel (B2a) vorzugsweise ein UV-strahlenhärtbares Beschichtungsmittel ist, wird als Härtungsstrahlung vorzugsweise UV-Strahlung eingesetzt. Wenn das Beschichtungsmittel (B2a) nicht strahlenhärtbar ist, ist es vorzugsweise chemisch härtbar. In diesem Fall erfolgt die Aushärtung gemäß Schritt (2) thermisch, beispielsweise durch Einsatz geeigneter Wärmestrahler. Auch eine kombinierte Aushärtung, d.h. eine thermische Aushärtung und eine Aushärtung mittels UV-Strahlung ist selbstverständlich möglich.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler (Halogenlampen), Laser, LED und zudem Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht oder durch Bestrahlung mit energiereichen Elektronen. Die üblicherweise zur Vernetzung ausreichende Strahlungsdosis bei UV-Härtung liegt im Bereich von 80 bis 3.000 $mJ/cm^2$. Selbstverständlich sind auch mehrere Strahlungsquellen für die Härtung einsetzbar, z.B. zwei bis vier. Diese können auch in jeweils unterschiedlichen Wellenlängenbereichen strahlen.

Vorzugsweise erfolgt die zumindest teilweise Härtung in Schritt (2) durch Bestrahlung durch den als Substrat eingesetzten Verbund (F1B1) hindurch.

*Optionaler Schritt (3)*

Der optionale Schritt (3) des erfindungsgemäßen Verfahrens sieht ein Entfernen der Beschichtung (B2) von dem Verbund (B2B1 F1) unter Wiedererhalt des in Schritt (1) eingesetzten Verbunds (B1F1) vor, wobei die Beschichtung (B2) auf ihrer zuvor innerhalb des Verbunds (B2B1 F1) der Beschichtung (B1) zugewandten Oberfläche das Spiegelbild der zumindest teilweise geprägten Oberfläche der Beschichtung (B1) des in Schritt (1) eingesetzten und in diesem Schritt wiedererhaltenen Verbunds (B1F1) aufweist.

Vorzugsweise wird die Beschichtung (B2) als freier Film durch ein Abziehen des Verbunds (B1F1) von der Beschichtung (B2) innerhalb des Verbunds (B2B1F1) oder umgekehrt erhalten. Der Verbund (B1F1) wird dabei wiedererhalten.

Vorzugsweise wird die Beschichtung (B2) in Schritt (3) dreistufig durch die Stufen (3a), (3b) und (3c) in Form eines Verbunds (B2KF2) erhalten, nämlich durch

(3a) Applizieren eines Klebstoffs (K) auf wenigstens einen Teil der Oberfläche des Verbunds (B2B1F1) auf seiner die Beschichtung (B2) aufweisenden Seite unter Erhalt eines Verbunds (KB2B1 F1),

(3b) Aufbringen eines Substrats (F2) auf den nach Stufe (3a) erhaltenen Verbund (KB2B1 F1) auf wenigstens einen Teil seiner den Klebstoff (K) aufweisenden Oberfläche oder umgekehrt unter Erhalt eines Verbunds (F2KB2B1F1) und

(3c) Abziehen des Verbunds (B1F1) von dem Verbund (F2KB2B1F1) unter Erhalt eines Verbunds (F2KB2), wobei die Beschichtung (B2) dieses Verbunds auf ihrer Oberfläche zumindest teilweise das Spiegelbild der zumindest teilweise geprägten Oberfläche der Beschichtung (B1) des Verbunds (B1F1) aufweist.

Die Beschichtung (B2) kann dann wiederum als freier Film durch Abziehen vom nach Stufe (3c) erhaltenen Verbund (F2KB2) erhalten werden.

Als Klebstoff (K) wird dabei vorzugsweise wenigstens ein Kaschierklebstoff wie ein Polyacrylat oder ein auf Polyacrylat basierender Klebstoff eingesetzt. Als Substrat (F2) können die gleichen Materialen eingesetzt werden, die vorstehend bereits im Zusammenhang mit dem Substrat (F1) genannt worden sind. Alle bevorzugten Ausführungsformen, mittels derer das Substrat (F1) beschrieben worden ist, gelten daher analog für das Substrat (F2). Vorzugsweise wird als Substrat (F2) ein metallisches Substrat eingesetzt, insbesondere ein Bauteil wie ein Bauteil mit einer nichtplanaren Geometrie. Das Bauteil kann ein beschichtetes Bauteil sein, das auf mindestens einer seiner Oberflächen, vorzugsweise auf der Oberfläche, die auf den Verbund (KB2B1F1) aufgebracht werden soll, mindestens eine Lackschicht oder eine Mehrfachbeschichtung aufweist. Als Klebstoff (K) kann ein Klebstoff eingesetzt, der selbst Teil eines Mehrschichtaufbaus ist. Beispiele solcher Klebstoffe (K) sind entsprechende Aufbauten, die als mittlere Schicht eine Polymerschicht (PS) aufweisen, die an jeder ihrer Oberflächen wiederum eine Klebstoffschicht (KS) aufweist. Die Klebstoffschicht (KS) kann jeweils ein Polyacrylat oder ein auf Polyacrylat basierender Klebstoff sein. Grundsätzlich kann jede Art von Polymer zur Herstellung der Polymerschicht (PS) eingesetzt werden. Beispiele für solche Polymere sind Poly(meth)acrylate, Polyester wie PET und/oder PBT, Polyvinylidenflouride, Polyvinylchloride, Polyamide und/oder Polyolefine. Insbesondere kann ein Polyester wie PET eingesetzt werden. Die Polymerschicht (PS) stellt einen In-liner dar. Die Schichtdicke der Polymerschicht kann dabei in einem Bereich von 5 bis 55 $\mu$m, vorzugsweise von 6 bis 50 $\mu$m, besonders bevorzugt von 7 bis 40 $\mu$m, insbesondere von 8 bis 30 $\mu$m liegen. Jede der Klebstoffschichten (KS) kann zur besseren Handhabung zunächst einen Release-Liner aufweisen, wie beispielsweise ein Silikonpapier. Vor dem Einsatz als Klebstoff (K) im erfindungsgemäßen Verfahren wird dieser Release-Liner jedoch entfernt.

*Optionale Schritte (4) bis (7) des erfindungsgemäßen Verfahrens zur Herstellung des Verbunds (F1B1)*

Vorzugsweise ist der in Schritt (1) des Verfahrens eingesetzte Verbund (B1F1) aus einem Substrat (F1) und einer zumindest teilweise geprägten und zumindest teilweise ausgehärteten Beschichtung (B1) wenigstens erhältlich durch die nachfolgend näher spezifizierten Schritte (4) bis (7). In **Fig. 1** sind die Schritte (4) bis (7) des erfindungsgemäßen Verfahrens beispielhaft illustriert, wie auch der nachstehenden Beschreibung dieser Figur zu entnehmen ist.

*Schritt (4)*

Schritt (4) des erfindungsgemäßen Verfahrens sieht ein Applizieren eines strahlenhärtbaren Beschichtungsmittels (B1a) auf wenigstens einen Teil einer Oberfläche eines Substrats (F1) vor. Das Substrat (F1) stellt ein Trägermaterial für das darauf aufzubringende Beschichtungsmittel (B1a) bzw. die darauf aufzubringende Beschichtung (B1) dar. Das Substrat (F1) kann beschichtet sein. Bei dem Substrat (F1) handelt es sich vorzugsweise um eine Folie, besonders bevorzugt um eine Folienbahn, ganz besonders bevorzugt um eine Endlos-Folienbahn. Bevorzugtes Material für das Substrat (F1) ist Polyester, insbesondere PET. Die Dicke des Substrates (F1) beträgt vorzugsweise 2 $\mu$m bis zu 5 mm. Besonders bevorzugt ist eine Schichtdicke von 25 bis 1.000 $\mu$m, insbesondere 50 bis 300 $\mu$m.

Vorzugsweise wird das Substrat (F1) bei der Durchführung des Schrittes (4) (und vorzugsweise auch bei der Durchführung der Schritte (5), (6) und (7) des Verfahrens) bewegt und ist daher ein bewegtes Substrat. Vorzugsweise wird das Substrat (F1) während der Durchführung von Schritt (4) mittels einer Transporteinrichtung wie einem Fließband bewegt. Die entsprechende zur Durchführung von Schritt (4) eingesetzte Vorrichtung umfasst daher vorzugsweise eine solche Transporteinrichtung. Die entsprechende zur Durchführung von Schritt (4) eingesetzte Vorrichtung umfasst ferner ein Mittel zum Applizieren des vorzugsweise strahlenhärtbaren Beschichtungsmittels (B1a) auf wenigstens einen Teil einer Oberfläche des Substrats (F1).

*Schritt (5)*

Schritt (5) des erfindungsgemäßen Verfahrens sieht ein zumindest teilweises Prägen des zumindest teilweise auf die Oberfläche des Substrats (F1) applizierten Beschichtungsmittels (B1a) mittels wenigstens eines wenigstens eine Prägematrize (p1) aufweisenden Prägewerkzeugs (P1) vor. Durch das zumindest teilweise Prägen wird dabei eine Prägestruktur zumindest teilweise auf die Oberfläche des auf das Substrats (F1) applizierten Beschichtungsmittels (B1a) übertragen. Die Begriffe "Prägung" und "Prägen" wurden bereits vorstehend definiert. Demzufolge wird darunter im Zusammenhang mit (B1a) bzw. (B1) die zumindest teilweise Ausrüstung des Beschichtungsmittels (B1a) als Teil des Verbunds (F1B1a) mit einer Prägestruktur bezeichnet. Dabei wird wenigstens ein bestimmtes Areal des Beschichtungsmittels (B1a) mit einer Prägestruktur ausgerüstet. Vorzugsweise wird die gesamte Oberfläche des Beschichtungsmittels (B1a) als Teil des Verbunds (F1B1a) mit einer Prägestruktur ausgerüstet. Vorzugsweise wird das Prägewerkzeug (P1) während der Durchführung von Schritt (5) wenigstens teilweise auf das applizierte Beschichtungsmittel (B1a) gepresst oder gedrückt.

Vorzugsweise werden durch Schritt (5) Mikro- und/oder Nanostrukturen als Prägestruktur auf das Beschichtungsmittel (B1a) übertragen.

Die entsprechende zur Durchführung von Schritt (5) eingesetzte Vorrichtung umfasst daher ein Mittel zum zumindest teilweisen Prägen des zumindest teilweise auf die Oberfläche des Substrats (F1) applizierten Beschichtungsmittels (B1a) mittels wenigstens eines Prägewerkzeugs (P1) auf. Ferner weist die eingesetzte Vorrichtung vorzugsweise ein Mittel zum Pressen von (P1) auf das vorzugsweise als Endlos-Folienbahn eingesetzte Substrat (F1) nach dem Applizieren des strahlenhärtbaren Beschichtungsmittels (B1a) auf (F1) auf, welches vorzugsweise in Förderrichtung des Substrats (F1) gesehen hinter dem Mittel zum Applizieren des strahlenhärtbaren Beschichtungsmittels (B1a) gelegen ist.

Die zumindest teilweise Prägung gemäß Schritt (5) des erfindungsgemäßen Verfahrens wird mittels eines Prägewerkzeugs (P1) durchgeführt. Bei (P1) kann es sich vorzugsweise um einen Prägekalander handeln, welcher vorzugsweise ein Rasterauftragswerk, besonders bevorzugt ein Rasterwalzwerk umfasst. Dieser Kalander verfügt vorzugsweise in Höhenrichtung übereinander in einem bestimmten Abstand angeordnete, gegensinnig, d.h. gegenläufig, oder mitläufig drehende Walzen, wobei der mit einer Prägestruktur zu versehene Verbund (F1B1a) den Walzen zugeführt und durch den sich ausbildenden Walzenspalt hindurchgeführt wird, wobei die Spaltweite variabel einstellbar ist. Das Rasterwalzwerk umfasst dabei vorzugsweise eine erste Walze wie eine metallische Walzen beispielweise eine Stahlwalze oder Nickelwalze einschließlich einer Walze aus Nickel, dem geringe Mengen an Phosphor zugemischt sind, oder aber eine Quarz-basierte Walze oder eine mit wenigstens einem Kunststoff beschichtete Walze, und eine zweite Walze. Die erste Walze (Prägewalze) fungiert dabei als Prägewerkzeug (P1) und enthält die Positivform der in die Oberfläche des Verbunds (F1B1a) einzuprägenden Prägestruktur, die dann die entsprechende Negativstruktur darstellt. Dies entspricht wiederum der Positivstruktur, die in Schritt (1) des Verfahrens auf das Beschichtungsmittel (B2a) übertragen werden soll. Das Prägewerkzeug (P1) kann selbst einen strukturierten Lack wie einen UV-Lack als Prägematrize aufweisen. Die zweite Walze dient als Abdruck- bzw. Anpresswalze. Die Erstellung der Negativform der einzuprägenden Struktur auf dem Prägewerkzeug (P1) erfolgt nach den dem Fachmann bekannten und üblichen Verfahren, wobei je nach Struktur und Materialien spezifische Verfahren besonders vorteilhaft sein können. Vorzugsweise wird dies erfindungsgemäß dadurch realisiert, dass die Prägewalze als Prägewerkzeug (P1) fungiert und eine Prägematrize (p1) umfasst. Mittels der Andruckwalze wird gegenläufig der zu prägende Verbund (F1B1a), beispielsweise in Form einer zumindest teilweise mit (B1a) beschichteten Folienbahn, bewegt. An dem Punkt des Walzenspaltes, der durch die in einem bestimmten Abstand zueinander angeordneten, gegensinnig drehenden Walzen gebildet wird, erfolgt die Prägung gemäß Schritt (5). Die erste Walze, die die Prägematrize (p1) führt, dient dabei der Prägung des Verbunds (F1B1a), der von der dieser Prägewalze gegenüberliegenden zweiten Walze geführt wird, welche den mit einer Prägestruktur zu

versehenden Verbund (F1B1a) gegen die erste Prägewalze drückt. Falls erforderlich kann Schritt (5) bei erhöhter Temperatur, z.B. bei 30 bis 100°C oder bis 80°C, durchgeführt werden. In diesem Fall durchläuft der zu prägende Verbund (F1B1a) zunächst ein Heizwalzwerk, danach erfolgt gegebenenfalls eine Bestrahlung mit Infrarot-Licht, bevor der vorstehend beschriebene eigentliche Prägevorgang erfolgt. Nach der Prägung durchläuft der dann geprägte Verbund (F1B1a) gegebenenfalls zur Abkühlung ein Kühlwalzwerk. Alternativ kann Schritt (5) auch unter Kühlen erfolgen: In diesem Fall durchläuft der zu prägende Verbund (F1B1a) zunächst ein Kühlwalzwerk, bevor der vorstehend beschriebene eigentliche Prägevorgang erfolgt. Als Prägewerkzeug (P1) kann auch ein herkömmlicher Druckzylinder eingesetzt werden, der die Negativform der in die Oberfläche des Verbunds (F1B1a) einzuprägenden Prägestruktur trägt. Dieser kann zur zumindest teilweisen Prägung auf den Verbund (F1B1a) gedrückt werden.

Die wenigstens eine Prägematrize (p1) des zur zumindest teilweisen Prägung gemäß Schritt (5) eingesetzten Prägewerkzeugs (P1) weist eine "Positivstruktur" ("Positivform") auf, d.h. diejenige Prägestruktur, die die nach Durchführung von Schritt (3) des erfindungsgemäßen Verfahrens erhaltene Beschichtung (B2) aufweist. Das Prägewerkzeug (P1) ist vorzugsweise ein metallisches Prägewerkzeug, besonders bevorzugt aus Nickel. Dementsprechend ist die Prägematrize (p1) vorzugsweise metallisch, besonders bevorzugt aus Nickel, insbesondere aus Nickel, welches geringe Mengen an Phosphor enthält. Zudem können Walzen eingesetzt werden, die mit wenigstens einem Kunststoff beschichtet sind. Alternativ können aber auch weiche Materialien wie beispielsweise Polydimethylsiloxane (PDMS) zur Herstellung von (p1) eingesetzt werden. Das auf (F1) applizierte Beschichtungsmittel (B1a) weist nach Durchführung von Schritt (5) eine Negativform der zu übertragenden Prägestruktur wie Mikro- und/oder Nanostrukturen auf.

Die Prägematrize des eingesetzten Prägewerkzeugs kann optional vor Durchführung des Schrittes (5) mit dem eingesetzten Beschichtungsmittel (B1a) vorbehandelt werden. Ein solche Vorbehandlung umfasst oder ist vorzugsweise ein Benetzen der Prägematrize mit dem Beschichtungsmittel (B1a).

*Schritt (6)*

Schritt (6) des erfindungsgemäßen Verfahrens sieht ein zumindest teilweises Aushärten des auf wenigstens einen Teil der Oberfläche des Substrats (F1) applizierten und zumindest teilweise geprägten Beschichtungsmittels (B1a) unter Erhalt eines Verbunds (F1B1) aus Substrat (F1) und zumindest teilweise geprägter und zumindest teilweise ausgehärteter Beschichtung (B1) vor, wobei das Beschichtungsmittel (B1a) während der gesamten Dauer der Aushärtung in Kontakt mit der wenigstens einen Prägematrize (p1) des wenigstens einen Prägewerkzeugs (P1) ist.

Vorzugsweise werden die Schritte (5) und (6) zeitgleich durchgeführt. Dabei erfolgt die Aushärtung gemäß Schritt (6) während der Durchführung von Schritt (5) vorzugsweise *in situ.*

Die entsprechende zur Durchführung von Schritt (6) eingesetzte Vorrichtung umfasst daher vorzugsweise wenigstens eine Strahlungsquelle zum Bestrahlen des strahlenhärtbaren Beschichtungsmittels (B1a) mit einer Härtungsstrahlung, vorzugsweise UV-Strahlung.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler (Halogenlampen), Laser, LED und zudem Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht oder durch Bestrahlung mit energiereichen Elektronen. Die üblicherweise zur Vernetzung ausreichende Strahlungsdosis bei UV-Härtung liegt im Bereich von 80 bis 3.000 $mJ/cm^2$. Selbstverständlich sind auch mehrere Strahlungsquellen für die Härtung einsetzbar, z.B. zwei bis vier. Diese können auch in jeweils unterschiedlichen Wellenlängenbereichen strahlen.

Vorzugsweise erfolgt die Härtung in Schritt (6) durch Bestrahlung durch das Substrat (F1) hindurch. Dabei ist es vorteilhaft, dass die Durchlässigkeit des Substrats (F1) für die eingesetzte Strahlung abgestimmt ist auf den eingesetzten wenigstens einen Photoinitiator. So ist beispielsweise das Material PET als Substrat (F1), also z.B. eine PET-Folie, durchlässig für Strahlung mit einer Wellenlänge unterhalb 300 nm. Als Photoinitiatoren, die bei dieser Strahlung Radikale erzeugen, kommen beispielsweise 2,4,6-Trimethylbenzoyldiphenylphosphinoxid, Ethyl-2,4,6-trimethyl-benzoylphenylphosphinat und Bis-(2,4,6-trimethylbenzoyl)-phenylphosphinoxid in Betracht.

*Schritt (7)*

Schritt (7) des erfindungsgemäßen Verfahrens sieht ein Entfernen des Verbunds (F1B1) vom Prägewerkzeug (P1) vor, wodurch das gewünschte Produkt, nämlich der Verbund (F1B1) aus Substrat (F1) und zumindest teilweise geprägter zumindest teilweise ausgehärteter Beschichtung (B1) erhalten wird.

In **Fig. 1** ist schematisch eine seitliche Ansicht einer Vorrichtung dargestellt, die zur Durchführung der Schritte (4) bis (7) des erfindungsgemäßen Verfahrens zur Herstellung eines Verbunds (F1B1), d.h. zur Herstellung eines Masterfilms, eingesetzt werden kann und an der das erfindungsgemäße Verfahren hinsichtlich der Schritte (4) bis (7) beispielhaft illustriert ist. Mittels dieser Vorrichtung können Strukturen wie Mikro- und/oder Nanostrukturen mittels eines

Prägewerkzeugs (P1) auf ein mit (B1a) beschichtetes Substrat (F1) übertragen werden und nach Aushärten ein als Masterfilm einsetzbarer Verbund (F1B1) - innerhalb von Fig. 1 als Masterfolienbahn (8) bezeichnet - erhalten werden.

Die in **Fig. 1** gezeigte Mastertransfervorrichtung (30) arbeitet nach einem Übertragungsprinzip, bei dem unmittelbar von einem strukturiertem Druckzylinder bzw. einer Druckwalze, die hier ein Masterdruckzylinder (17) ist, die gewünschten Negativ-Strukturen in die auf die Masterfolienbahn (8b) aufgebrachte, noch nicht ausgehärtete Lackschicht eingeprägt - entsprechend einem Verbund (F1B1 a) - und diese dann mit den darauf aufgebrachten Strukturen *in situ* mittels einer Beleuchtungseinheit (3) unter Erhalt der Masterfolienbahn (8) - entsprechend einem Verbund (F1B1) - zumindest teilweise gehärtet wird. Die als Substrat (F1) eingesetzte Folienbahn (8a) wird in diesem Verfahren von einer Folienbahnrolle (18), die nur das Trägermaterial, also die reine Folie ohne aufgebrachten Masterlack enthält, abgezogen, über diverse Umlenkrollensysteme und Bahnspannsysteme geführt und in einen Prägebereich (1) der Vorrichtung eingebracht. Dort läuft die Folienbahn (8a) in einen Bereich zwischen einer Andruckwalze (4) und dem Masterdruckzylinder (17) und wird außerhalb des Druckbereichs in der Lackauftragseinrichtung (27) mit der noch nicht ausgehärteten Masterlackschicht (entsprechend dem Beschichtungsmittel B1a) versehen. Dieser Lackauftrag entspricht Schritt (4) des erfindungsgemäßen Verfahrens. In dem Prägebereich (1), in dem die Masterfolienbahn (8b) mit der noch nicht ausgehärteten Masterlackschicht entlang eines Abschnittes der Mantelfläche des Masterdruckzylinders (17) läuft, werden die in dem Masterdruckzylinder (17) in dessen Mantelfläche eingeprägten Mikro- und/oder Nanostrukturen als Negativabbild in die Masterlackschicht der Masterfolienbahn (8b) eingebracht und übertragen. Dies entspricht Schritt (5) des erfindungsgemäßen Verfahrens. Die das ungehärtete Beschichtungsmittel (B1a) aufweisende Masterfolienbahn (8b) wird dann gemäß Schritt (6) des erfindungsgemäßen Verfahrens ausgehärtet. Dabei wird *in situ* durch Bestrahlen mit einer Beleuchtungseinheit (3) mittels UV-Strahlung zumindest teilweise ausgehärtet, z.B. mittels einer Einheit gebildet aus UV-LEDs. Anschließend wird die so erhaltene Masterfolie (8), also der Verbund (F1B1), gemäß Schritt (7) des erfindungsgemäßen Verfahrens von der Mantelfläche des Masterdruckzylinders (17) abgezogen und die so fertig gestellte Masterfolienbahn (8) wird auf eine Folienbahnrolle (19) aufgespult. Die Folienbahnrolle (19) enthält dann die fertige Masterfolienbahn (8) mit der darauf aufgebrachten Masterlackschicht und den darin eingeprägten Negativabbildern der Mikro- und/oder oder Nanostrukturen. Diese Folienbahnrolle (19) kann entnommen und dann in einer Vorrichtung zur Durchführung der Schritte (1) bis (3) des erfindungsgemäßen Verfahrens eingesetzt werden.

*Erfindungsgemäß eingesetzte Beschichtungsmittel* (*B1a*) *und* (*B2a*)

*Beschichtungsmittel (B1a)*

Das Beschichtungsmittel (B1a) ist ein strahlenhärtbares Beschichtungsmittel. Die Begriffe "strahlenhärtbar" und "strahlenhärtend" sind dabei austauschbar. Unter dem Begriff "Strahlenhärtung" wird vorzugsweise eine radikalische Polymerisation von polymerisierbaren Verbindungen infolge einer elektromagnetischen und/oder korpuskularen Strahlung, beispielsweise (N)IR-Licht im Wellenlänge-bereich von $\lambda$=>400-1.200 nm, bevorzugt 700-900 nm und/oder UV-Licht im Wellenlängenbereich von $\lambda$=100 bis 400 nm, bevorzugt von $\lambda$=200 bis 400 nm und besonders bevorzugt $\lambda$=250 bis 400 nm und/oder Elektronenstrahlung im Bereich von 150 bis 300 keV und besonders bevorzugt mit einer Strahlungsdosis von mindestens 80, bevorzugt 80 bis 3.000 $mJ/cm^2$ verstanden. Besonders bevorzugt wird mittels UV-Strahlung als Strahlenhärtung gehärtet. Das Beschichtungsmittel (B1a) kann durch Einsatz einer geeigneten Strahlenquelle gehärtet werden. Somit ist (B1a) vorzugsweise ein UV-Strahlen-härtendes Beschichtungsmittel.

Das Beschichtungsmittel (B1a) enthält
die wenigstens eine Komponente (a) in einer Menge in einem Bereich von 40 bis 95 Gew.-%, vorzugsweise in einem Bereich von 45 oder >45 bis 90 Gew.-%, besonders bevorzugt in einem Bereich von 50 oder >50 wie 55 bis 85 Gew.-%, ganz besonders bevorzugt in einem Bereich von 55 oder 60 bis 80 Gew.-%,
das wenigstens eine Additiv als Komponente (b) in einer Menge in einem Bereich von 0,01 bis 5 Gew.-%, vorzugsweise in einem Bereich von 0,05 bis 4,5 Gew.-%, besonders bevorzugt in einem Bereich von 0,1 bis 4 Gew.-%, ganz besonders bevorzugt in einem Bereich von 0,2 oder 0,5 bis 3 Gew.-%,
wenigstens einen Photoinitiator als Komponente (c) in einer Menge in einem Bereich von 0,01 bis 15 Gew.-%, vorzugsweise in einem Bereich von 0,1 bis 12 Gew.-%, besonders bevorzugt in einem Bereich von 0,5 bis 10 Gew.-%,
die wenigstens eine mindestens eine Kohlenstoffdoppelbindung aufweisende Komponente (d) in einer Menge in einem Bereich von 0 bis 45 Gew.-%, vorzugsweise in einem Bereich von 0 bis 40 Gew.-%, besonders bevorzugt in einem Bereich von 0 bis 35 Gew.-%, ganz besonders bevorzugt in einem Bereich von 0 bis 30 Gew.-%,
jeweils bezogen auf das Gesamtgewicht des Beschichtungsmittels (B1a).

Die Gegenwart von Komponente (d) im erfindungsgemäß eingesetzten Beschichtungsmittel (B1a) ist somit lediglich optional, was durch den jeweils vorstehend angegebenen unteren Grenzwert von 0 Gew.-% ersichtlich ist. Vorzugsweise enthält das Beschichtungsmittel (B1a) die Komponente (d) in einer Menge von bis zu 30 Gew.-%, bezogen auf das Gesamtgewicht des Beschichtungsmittels (B1a).

Die Komponenten (a), (b), (c) und (d) sind jeweils voneinander verschieden. Die angegebenen Mengen der

Komponenten (a), (b), (c) und (d) beziehen sich jeweils auf das Gesamtgewicht des Beschichtungsmittels (B1a). Die Mengen aller im Beschichtungsmittel (B1a) enthaltenen Komponenten, d.h. die Mengen an in (B1a) enthaltenen Komponenten (a), (b) und (c) sowie optional (d) sowie weiterer optional darin vorhandener Komponenten, addieren sich auf 100 Gew.-%.

Komponente (a) weist wenigstens drei jeweils voneinander verschiedene oder zumindest teilweise identische Struktureinheiten der Formel (I) auf

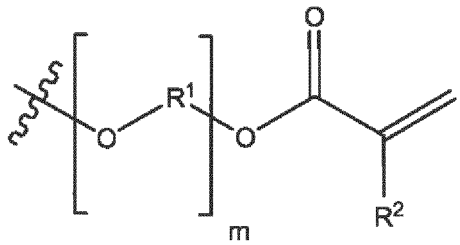

**(I),**

in denen

die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15, vorzugsweise in einem Bereich von 1 bis 10, besonders bevorzugt in einem Bereich von 1 bis 8 oder 2 bis 8, ganz besonders bevorzugt in einem Bereich von 1 bis 6 oder 2 bis 6, insbesondere in einem Bereich von 1 bis 4 oder 2 bis 4, stehen, jedoch mit der Maßgabe, dass in wenigstens einer der Struktureinheiten der Formel (I) der Parameter m mindestens 2, vorzugsweise mindestens 3 beträgt.

Vorzugsweise weist Komponente (a) wenigstens drei identische Struktureinheiten der Formel (I) auf.

Das Symbol

„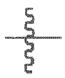“

steht dabei für eine Bindung des jeweiligen Restes an die übergeordnete Struktur der Komponente (a), d.h. beispielsweise für eine Bindung des Restes $-[O-R^1]_m-O-C(=O)-C(R^2)=CH_2$ innerhalb der Struktureinheit der Formel (I) an die übergeordnete Struktur der Komponente (a). Die Bindung erfolgt dabei vorzugsweise über eine Verknüpfung des Sauerstoffatoms des Restes $-[O-R^1]_m-$ an ein Kohlenstoffatom des übergeordneten Restes. Analoges gilt für die weiteren Struktureinheiten der Formel (I). Es ist eindeutig, dass alle wenigstens drei Struktureinheiten der Formel (I) innerhalb einer einzigen Komponente - nämlich der Komponente (a) - vereinigt sind.

Vorzugsweise weist die Komponente (a) genau drei Struktureinheiten der Formel (I) auf. In diesem Fall weist Komponente (a) genau drei funktionelle (Meth)acrylGruppen auf. Alternativ können die Struktureinheiten der Formeln (I) jeweils auch mehr als dreimal als Teil der Komponente (a) vorliegen. In diesem Fall kann Komponente (a) beispielsweise mehr als drei funktionelle (Meth)acryl-Gruppen aufweisen, beispielsweise 4, 5 oder 6 (Meth)acryl-Gruppen.

Die vorstehend genannten Reste $R^1$ stehen jeweils unabhängig voneinander für eine $C_2$-$C_8$-Alkylengruppe, vorzugsweise für eine $C_2$-$C_6$-Alkylengruppe, besonders bevorzugt für eine $C_2$-$C_4$-Alkylengruppe, ganz besonders bevorzugt jeweils unabhängig voneinander für eine Ethylengruppe und/oder eine Propylengruppe, ganz besonders bevorzugt für Ethylen. Insbesondere stehen alle Reste $R^1$ für Ethylen. Als Propylengruppen kommen jeweils Reste $R^1$ in Frage, die eine Struktur $-CH_2-CH_2-CH_2-$ oder eine Struktur $-CH(CH_3)-CH_2-$ oder eine Struktur $-CH_2-CH(CH_3)-$aufweisen. Besonders bevorzugt ist aber jeweils die Propylenstruktur $-CH_2-CH_2-CH_2-$.

Die Parameter m stehen jeweils unabhängig voneinander für eine ganze Zahl in einem Bereich von 1 bis 15. Da die Komponente (a) wenigstens drei der Struktureinheiten der Formeln (I) aufweist und in wenigstens einer der Struktureinheiten der Formel (I) der Parameter m mindestens 2 beträgt, enthält Komponente (a) insgesamt wenigstens vier Ethergruppen der allgemeinen Formel "$-O-R^1-$".

Vorzugsweise weist die Komponente (a) insgesamt wenigstens fünf, besonders bevorzugt wenigstens sechs, Ethergruppen der allgemeinen Formel "$-O-R^1-$" auf. Vorzugsweise liegt die Anzahl der Ethergruppen der allgemeinen

Formel "-O-$R^1$-" innerhalb der Komponente (a) in einem Bereich von 4 bis 18, besonderes bevorzugt in einem Bereich von 5 bis 15, ganz besonderes bevorzugt in einem Bereich von 6 bis 12.

Vorzugsweise beträgt der Anteil der in den Struktureinheiten der Formel (I) der Komponente (a) enthaltenen Ethersegmente -[O-$R^1$]$_m$ insgesamt wenigstens 35 Gew.-%, besonders bevorzugt wenigstens 38 Gew.-%, ganz besonders bevorzugt wenigstens 40 Gew.-%, noch bevorzugter wenigstens 42 Gew.-%, insbesondere wenigstens 45 Gew.-% jeweils bezogen auf das Gesamtgewicht der Komponente (a).

Vorzugsweise weist die Komponente (a) ein Molekulargewicht ($M_n$) im Bereich von 300 bis 2000 g/mol, besonders bevorzugt von 350 bis 1500 g/mol, insbesondere von 400 bis 1000 g/mol.

Besonders bevorzugt wird als Komponente (a) wenigstens eine Verbindung der allgemeinen Formel (IVa) und/oder (IVb) eingesetzt,

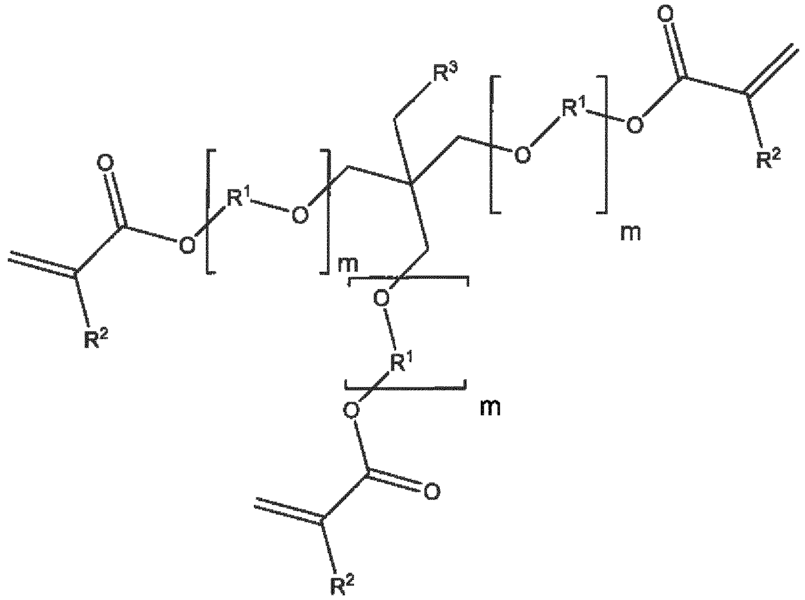

(IVa),

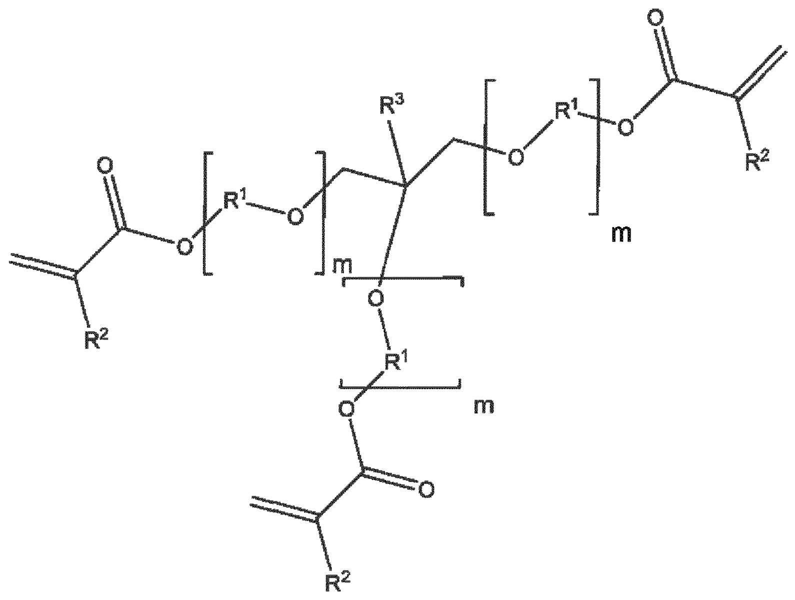

(IVb),

in denen jeweils unabhängig voneinander

$R^1$ und $R^2$ sowie m die vorstehend im Zusammenhang mit den Struktureinheiten (I) genannten Bedeutungen einschließlich der vorstehend genannten bevorzugten Ausführungsformen davon haben und
$R^3$ für H, $C_1$-$C_8$-Alkyl, OH oder O-$C_{1-8}$-Alkyl steht, besonders bevorzugt für $C_1$-$C_4$-Alkyl, OH oder O-$C_{1-4}$-Alkyl steht, ganz besonders bevorzugt für $C_1$-$C_4$-Alkyl oder OH steht oder
$R^3$ für den Rest -[O-$R^1$]$_m$-O-C(=O)-C($R^2$)=$CH_2$ steht, worin $R^1$, $R^2$ und m die vorstehend im Zusammenhang mit der Struktureinheit (I) genannten Bedeutungen einschließlich der vorstehend genannten bevorzugten Ausführungsformen davon haben.

Ganz besonders bevorzugt wird als Komponente (a) wenigstens eine Verbindung der allgemeinen Formel (IVa) eingesetzt, in der

die Reste $R^1$ jeweils unabhängig voneinander für eine $C_2$-$C_8$-Alkylengruppe stehen,
die Reste $R^2$ jeweils unabhängig voneinander für H oder Methyl stehen, die Parameter m jeweils unabhängig voneinander für einen ganzzahligen Parameter in einem Bereich von 1 bis 15 stehen, vorzugsweise in einem Bereich von 1 bis 10, besonders bevorzugt in einem Bereich von 1 bis 8 oder 2 bis 8, ganz besonders bevorzugt in einem Bereich von 1 bis 6 oder 2 bis 6, insbesondere in einem Bereich von 1 bis 4 oder 2 bis 4, jedoch mit der Maßgabe, dass in wenigstens einer, vorzugsweise in allen, der Struktureinheiten der Formel (I) der Parameter m mindestens 2 beträgt.
$R^3$ für $C_1$-$C_8$-Alkyl, OH oder O-$C_{1-8}$-Alkyl steht, besonders bevorzugt für $C_1$-$C_4$-Alkyl, OH oder O-$C_{1-4}$-Alkyl steht, ganz besonders bevorzugt für $C_1$-$C_4$-Alkyl oder OH steht.

Insbesondere bevorzugt werden als Komponente (a) (Meth)acrylate von insgesamt 4fach bis 20fach, oder von 4fach bis 12fach alkoxyliertem wie ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythritol eingesetzt. Am meisten bevorzugt sind entsprechende (Meth)acrylate, die sich von entsprechend alkoxyliertem Trimethylolpropan ableiten. Solche Produkte sind kommerziell erhältlich und werden beispielsweise unter den Bezeichnungen Sartomer® SR 499 und Sartomer® SR 502 sowie Sartomer® SR 415 und Sartomer® SR 9035 sowie Sartomer® SR 501 vertrieben. Der Begriff "(Meth)acryl" bzw, "(Meth)acrylat" umfasst im Sinne der vorliegenden Erfindung sowohl Methacryl als auch Acryl bzw. sowohl Methacrylat als auch Acrylat.

Vorzugsweise enthält das Beschichtungsmittel (B1a) - abgesehen von der optionalen Komponente (d) - keine Komponente, die nur genau eine oder nur genau zwei ethylenisch ungesättigte Gruppen wie (Meth)acryl-Gruppen aufweist. Für den Fall, dass (B1a) keine Komponente (d) aufweist, enthält (B1a) somit vorzugsweise keine Komponente, die nur genau eine oder nur genau zwei ethylenisch ungesättigte Gruppen wie (Meth)acryl-Gruppen aufweist.

Komponente (b) ist ein Additiv. Der Begriff des Additivs ist dem Fachmann bekannt, beispielsweise aus dem Römpp Lexikon, "Lacke und Druckfarben", Thieme Verlag, 1998, Seite 13. Vorzugsweise wird als Komponente (b) wenigstens ein Rheologieadditiv eingesetzt. Auch dieser Begriff ist dem Fachmann bekannt, beispielsweise aus dem Römpp Lexikon, "Lacke und Druckfarben", Thieme Verlag, 1998, Seite 497. Die Begriffe "Rheologieadditiv", *"rheologisches Additiv" und "Rheologiehilfsmittel" sind dabei austauschbar. Vorzugsweise ist das als Komponente (b) eingesetzte Additiv ausgewählt aus der Gruppe bestehend aus Verlaufmitteln, oberflächenaktiven Agentien wie Tensiden, Netz- und Dispergiermitteln, sowie Verdickungsmitteln, Thixotropiermitteln, Weichmachern und Gleit- und Antiblocking-Additiven sowie Mischungen davon. Diese Begriffe sind dem Fachmann ebenfalls bekannt, z.B. aus dem Römpp Lexikon, "Lacke und Druckfarben", Thieme Verlag, 1998. Als Verlaufmittel werden Komponenten bezeichnet, die durch Erniedrigung der Viskosität und/oder Oberflächenspannungen Beschichtungsmitteln zu eben verlaufenden Filmen verhelfen. Als Netz- und Dispergiermitteln werden Komponenten bezeichnet, die die Oberflächenspannung oder allgemein die Grenzflächenspannung herabsetzen. Als Gleit- und Antiblocking-Additive werden Komponenten bezeichnet, die das Verkleben (Blocken) reduzieren.

Beispiele für kommerziell erhältliche Additive sind die Produkte Efka® SL 3259, Byk® 377, Tego® Rad 2500, Tego® Rad 2800,Byk® 394, Byk-SILCLEAN 3710, Silixan® A250, Novec FC 4430 und Novec FC 4432.

Vorzugsweise wird als Additiv (b) wenigstens ein Poly(meth)acrylat und/oder wenigstens ein Siloxan wie wenigstens eine Oligosiloxan und/oder Polysiloxan und/oder wenigstens ein Fluor-haltiges Polymer wie ein Fluor-haltiger vorzugsweise aliphatischer Polyester eingesetzt. Besonders bevorzugt sind Siloxane als Komponente (b). Ganz besonders bevorzugt werden Silikon(meth)acrylate eingesetzt.

Zur Härtung mit Hilfe von (N)IR- und/oder UV-Licht enthält das Beschichtungsmittel (B1a) wenigstens einen Photoinitiator als Komponente (c). Dieser kann durch Licht der eingestrahlten Wellenlänge zu Radikalen zersetzt werden, die ihrerseits eine radikalische Polymerisation starten können. Bei Härtung mit Elektronenstrahlung ist die Anwesenheit solcher Photoinitiatoren dagegen nicht erforderlich. Vorzugsweise enthält das Beschichtungsmittel (B1a) wenigstens

einen Photoinitiator als Komponente (c), der durch Licht der eingestrahlten Wellenlänge zu Radikalen zersetzt werden kann, die ihrerseits eine radikalische Polymerisation starten können.

Photoinitiatoren wie UV-Photoinitiatoren sind dem Fachmann bekannt. In Betracht kommen beispielsweise Phosphinoxide, Benzophenone, α-Hydroxy-alkyl-aryl-ketone, Thioxanthone, Anthrachinone, Ace-tophenone, Benzoine und Benzoinether, Ketale, Imidazole oder Phenylglyoxylsäuren und Gemische davon.

Phosphinoxide sind beispielsweise Mono- oder Bisacylphosphinoxide, beispielsweise 2,4,6-Trimethylbenzoyldiphenyl-phosphinoxid, Ethyl-2,4,6-trimethylbenzoylphenyl-phosphinat oder Bis(2,6-dimethoxy-benzoyl)-2,4,4-trimethylpentylphosphinoxid. Benzophenone sind beispielsweise Benzophenon, 4-Aminobenzophenon, 4,4'-Bis(di-methylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon, α-Hydroxy-alkyl-aryl-ketone sind beispielsweise 1-Benzoyl-cyclohexan-1-ol (1-Hydroxycyclohexylphenylketon), 2-Hydroxy-2,2-dimethylacetophenon (2-Hydroxy-2-methyl-1-phenyl-propan-1-on), 1-Hydroxyaceto-phenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält. Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Diisopropylthioxanthon, 2,4-Dichlorthioxanthon oder Chloroxanthenon, Anthrachinone sind beispielsweise β-Methylanthrachinon, tert-Butylanthrachinon, Anthrachinoncarbonsäureester, Benz[de]-anthracen-7-oη, Benz[a]anthracen-7,12-dion, 2-Methylanthrachinon, 2-Ethylanthrachinon, 2-tert-Butylanthrachinon, 1-Chloranthrachinon oder 2-Amylanthrachinon. Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyaceto-phenon, α-Tetralon, 9-Acetylphenanthren, 2-Acetylphenanthren, 3-Acetylphenan-thren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Di-ethoxy-2-phenylacetophenon, 1,1-Dichloracetophenon, 1-Hydroxyacetophenon, 2,2-Diethoxyacetophenon, 2-Methyl-1-[4-(methylthio)phenyl] -2-morpholinopropan-1-on, 2,2-Dimethoxy-1,2-diphenylethan-2-on oder 2-Benzyl-2-dimethylamino-1-(4-morpho-linophenyl)-butan-1-on. Benzoine und Benzoinether sind beispielsweise 4-Morpholino-deoxybenzoin, Benzoin, Benzoinisobutylether, Benzointetrahydropyranylether, Benzoinmethylether, Benzoinethylether, Benzoinbutylether, Benzoinisopropylether oder 7-H-Benzoinmethylether. Ketale sind beispielsweise Acetophenondimethylketal, 2,2-Diethoxyacetophenon, oder Benzilketale, wie Benzildimethylketal. Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion. Typische Gemische umfassen beispielsweise 2-Hydroxy-2-methyl-1-phenyl-propan-2-oη und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenyl-phosphinoxid.

Bevorzugt unter diesen Photoinitiatoren sind 2,4,6-Trimethylbenzoyldiphenylphosphinoxid, Ethyl-2,4,6-trimethylbenzoyl-phenylphosphinat, Bis-(2,4,6-trimethylbenzoyl)-phenylphosphin-oxid, Benzophenon, 1-Benzoylcyclohexan-1-ol, 2-Hydroxy-2,2-dimethylacetophenon und 2,2-Dimethoxy-2-phenylacetophenon. Vorzugsweise wird daher wenigstens ein solcher Photoinitiator als Komponente (c) eingesetzt. Komponente (c) ist verschieden von den Komponenten (a), (b) und (d). Kommerziell erhältliche Photoinitiatoren sind beispielsweise die Produkte Irgacure® 184, Irgacure® 500, Irgacure® TPO, Irgacure® TPO-L und Lucirin® TPO sowie Darocure® 1173 der BASF SE.

Wie vorstehend erwähnt ist der Einsatz der wenigstens einen Komponente (d) nur optional. Komponente (d) weist mindestens eine vorzugsweise endständige Kohlenstoffdoppelbindung auf. Vorzugsweise handelt es sich dabei um eine (Meth)acryl-Gruppe. Komponente (d) weist vorzugsweise ein oder zwei ethylenisch ungesättigte Gruppen auf wie beispielsweise ein oder zwei oder drei oder auch mehr (Meth)acryl-Gruppen. Es können auch zwei oder mehr unterschiedliche Komponenten (d) eingesetzt werden.

Beispiele für Komponente (d) sind mono-, di-, und/oder tri-funktionelle (Meth)acrylsäureester wie Ethylenglykoldi(meth)acrylat, 1,2-Propandioldi(meth)-acrylat, 1,3-Propandioldi(meth)acrylat, 1,4-Butandioldi(meth)acrylat, 1,3-Butandioldi(meth)acrylat, 1,5-Pentandioldi(meth)acrylat, 1,6-Hexandioldi(meth)-acrylat, 1,8-Octandioldi(meth)acrylat, Neopentylglykoldi(meth)acrylat, 1,1-, 1,2-, 1,3-und 1,4-Cyclohexandimethanoldi(meth)acrylat, 1,2-, 1,3- oder 1,4-Cyclohexandioldi(meth)acrylat,Tricyclodecandimethanoldi(meth)acrylat, Trimethylolpropantri(meth)acrylat, Ditrimethylolpropanpenta- oder -hexa(meth)acrylat, Pentaerythrittri- oder -tetra(meth)acrylat, Glycerindi- oder -tri(meth)acrylat, sowie Di- und Poly(meth)acrylate von Zuckeralkoholen, wie beispielsweise von Sorbit, Mannit, Diglycerol, Threit, Erythrit, Adonit (Ribit), Arabit (Lyxit), Xylit, Dulcit (Galactit), Maltit oder Isomalt, 2-Phenoxyethyl(meth)acrylat, Ethyldiglykol(meth)acrylat, 4-tert.-Butylcyclo-hexyl(meth)acrylat, Trimethylolpropanformalmono(meth)acrylat, Isobornyl(meth)acrylat, Tetrahydro-furfury(meth)acrylat, 2-(2-Ethoxyethoxy)ethyl(meth)acrylat, sowie Lauryl-, Stearyl-, Isodecyl-, Octyl- und Decyl(meth)acrylat, Ester von α,β-ethylenisch ungesättigten Carbonsäuren, bevorzugt von (Meth)acrylsäure mit Alkoholen, die 1 bis 20 C-Atome aufweisen, bevorzugt gegebenenfalls hydroxysubstituierte 1 bis 20 C-Atome aufweisende Alkanole, z.B. (Meth)acrylsäuremethylester, (Meth)acrylsäureethylester, (Meth)-acrylsäure-n-butylester, (Meth)acrylsäure-2-ethylhexylester, 2-Hydroxyethyl(meth)-acrylat, 2-Hydroxypropyl(meth)acrylat oder 4-Hydroxybutyl(meth)acrylat.

Ganz besonders bevorzugte Komponenten (d) sind 1,4-Butandioldi(meth)acrylat und 1,6-Hexandioldi(meth)acrylat sowie Tricyclodecandimethanoldi(meth)acrylat.

Als Komponente (d) kann zusätzlich oder alternativ zudem wenigstens ein Polyester-, Polyether-, Carbonat-, Epoxid-, Poly(meth)acrylat- und/oder Urethan-(Meth)acrylat, und/oder ungesättigtes Polyesterharz eingesetzt werden.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan-(meth)acrylate enthalten zusätzlich noch ionische und/oder nichtionische hydrophile Gruppen, welche z.B. durch Aufbaukomponenten wie Hydroxycarbonsäuren ins Urethan eingebracht werden. Derartige Urethan(meth)acrylate enthalten als Aufbaukomponenten im Wesentlichen:

(a) mindestens ein organisches aliphatisches, aromatisches oder cycloaliphatisches Di- oder Polyisocyanat, beispielsweise mindestens eines der oben bei der Zweikomponenten Beschichtungsmassen beschriebenen Polyisocyanaten,
(b) mindestens eine Verbindung mit mindestens einer gegenüber Isocyanat reaktiven Gruppe, bevorzugt einem der oben bei den Polyacrylatpolyolen beschriebenen hydroxygruppentragenden Monomere, und mindestens einer radikalisch polymerisierbaren ungesättigten Gruppe und
(c) gegebenenfalls mindestens eine Verbindung mit mindestens zwei gegenüber Isocyanat reaktiven Gruppen, beispielsweise einem der oben bei den Polyesterolen beschriebenen mehrwertigen Alkoholen.

Die Urethan(meth)acrylate haben vorzugsweise ein zahlenmittleres Molgewicht $M_n$ von 200 bis 20.000, insbesondere von 500 bis 10.000 besonders bevorzugt 600 bis 3.000 g/mol (bestimmt durch Gelpermeationschromatographie mit Tetrahydrofuran und Polystyrol als Standard). Die Urethan(meth)acrylate haben vorzugsweise einen Gehalt von 1 bis 5, besonders bevorzugt von 2 bis 4 Mol (Meth)acrylgruppen pro 1.000 g Urethan(meth)acrylat.

Epoxid(meth)acrylate sind erhältlich durch Umsetzung von Epoxiden mit (Meth)acrylsäure. Als Epoxide in Betracht kommen z.B. epoxidierte Olefine, aromatische Glycidylether oder aliphatische Glycidylether, bevorzugt solche von aromatischen oder aliphatischen Glycidylethern. Epoxidierte Olefine können beispielsweise sein Ethylenoxid, Propylenoxid, iso-Butylenoxid, 1-Butenoxid, 2-Butenoxid, Vinyloxiran, Styroloxid oder Epichlor-hydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin. Aromatische Glycidylether sind z.B. Bisphenol-A-diglycidylether, Bisphenol-F-di-glycidylether, Bisphenol-B-diglycidylether, Bisphenol-S-diglycidylether, Hydrochinon-diglycidylether, Alkylierungsprodukte von Phenol/Dicyclopentadien, z.B. 2,5-bis[(2,3-Epoxypropoxy)phenyl]octahydro-4,7-methano-5H-inden), Tris[4-(2,3-epoxypropoxy)phenyl]methan Isomere), Phenol basierte Epoxy Novolake und Kresol basierte Epoxy Novolake. Aliphatische Glycidylether sind beispielsweise 1,4-Butandioldiglycidether, 1,6-Hexandioldiglycidylether, Trimethylolpropantriglycidylether, Pentaerythrittetra-glycidylether, 1,1,2,2-tetrakis[4-(2,3-epoxypropoxy)phenyl]ethan, Diglycidylether von Polypropylenglykol ($\alpha,\omega$-bis(2,3-epoxypropoxy)poly-(oxypropylen) (und von hydriertem Bisphenol A (2,2-bis[4-(2,3-epoxypropoxy)cyclohexyl]propan). Die Epoxid(meth)acrylate haben vorzugsweise ein zahlenmittleres Molgewicht $M_n$ von 200 bis 20.000, besonders bevorzugt von 200 bis 10.000 g/mol und ganz besonders bevorzugt von 250 bis 3.000 g/mol; der Gehalt an (Meth)acrylgruppen beträgt vorzugsweise 1 bis 5, besonders bevorzugt 2 bis 4 pro 1.000 g Epoxid-(meth)acrylat (bestimmt durch Gelpermeationschromatographie mit Polystyrol als Standard und Tetrahydrofuran als Elutionsmittel).

(Meth)acrylierte Poyl(meth)acrylate sind die entsprechenden Ester von $\alpha,\beta$-ethylenisch ungesättigten Carbonsäuren, bevorzugt von (Meth)acrylsäure, besonders bevorzugt von Acrylsäure mit Polyacrylatpolyolen, erhältlich durch Veresterung von Poly(meth)acrylatpolyolen mit (Meth)acrylsäure. Bei den Polyacrylatpolyolen kann es sich beispielsweise um solche handeln, wie sie oben bei den Zweikomponenten Beschichtungsmassen beschrieben worden sind.

Carbonat(meth)acrylate sind mit verschiedenen Funktionalitäten erhältlich. Das zahlenmittlere Molekulargewicht $M_n$ der Carbonat(meth)acrylate ist vorzugsweise kleiner 3.000 g/mol, besonders bevorzugt kleiner 1.500 g/mol, besonders bevorzugt kleiner 800 g/mol (bestimmt durch Gelpermeations-chromatographie mit Polystyrol als Standard, Lösemittel Tetrahydrofuran).Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP 0 092 269 A1 beschrieben ist. Erhältlich sind sie auch durch Umsetzung von Phosgen, Harnstoffderivaten mit mehrwertigen, z.B. zweiwertigen Alkoholen. Denkbar sind auch (Meth)acrylate von Polycarbonatpolyolen, wie das Reaktions-produkt aus einem der genannten Di- oder Polyole und einem Kohlensäureester sowie einem hydroxylgruppenhaltigen (Meth)acrylat. Geeignete Kohlensäureester sind z.B. Ethylen-, 1,2- oder 1,3-Propylencarbonat, Kohlensäuredimethyl-, -diethyl- oder -dibutylester. Geeignete hydroxygruppenhaltige (Meth)acrylate sind beispielsweise 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat. Vorzugsweise handelt es sich bei den Carbonat(meth)acrylaten um aliphatische Carbonat(meth)acrylate.

Ungesättigte Polyesterharze sind vorzugsweise aufgebaut aus den Komponenten:

(a1) Maleinsäure oder deren Derivate,
(a2) mindestens eine cyclische Dicarbonsäure oder deren Derivate,
(a3) mindestens ein aliphatisches oder cycloaliphatisches Diol.

Unter Derivaten werden im Rahmen dabei bevorzugt verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen $C_1$-$C_4$-Alkyl-komponenten, besonders bevorzugt gemischte Methylethylester.

Enthält (B1a) eine Komponente (d), so ist diese vorzugsweise wenigstens ein Urethan(meth)acrylat.

Das Beschichtungsmittel (B1a) kann wenigstens eine weitere von den Komponenten (a) bis (d) verschiedene Komponente (e) enthalten wie beispielsweise Füllstoffe, Pigmente, thermisch aktivierbare Initiatoren wie z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Diiso-propylpercarbonat, tert-Butylperoktoat oder Benzpinakol, Cumolhydroperoxid, Dicumylperoxid, tert.-Butylperbenzoat, silylierte Pinakole, hydroxylgruppenhaltige Amin-N-Oxide, wie 2,2,6,6-Tetramethylpiperidin-N-oxyl und 4-Hydroxy-2,2,6,6-Tetramethylpiperidin-N-oxyl, und organische Lösemittel sowie Stabilisatoren. Vorzugsweise sind in (B1a) jedoch keine organischen Lösemittel enthalten. Komponente (e) kann in einer Menge in einem Bereich von 0 bis 15 Gew.-%, vorzugsweise in einem Bereich von 0 bis 12 Gew.-%, besonders bevorzugt in einem Bereich von 0 bis 10 Gew.-% in (B1a) enthalten sein, jeweils bezogen auf das Gesamtgewicht des Beschichtungsmittels (B1a).

Vorzugsweise ist der Festkörpergehalt des Beschichtungsmittels (B1a) $\geq$80 Gew.-%, besonders bevorzugt $\geq$90 Gew.-%, ganz besonders bevorzugt $\geq$95 Gew.-%, insbesondere $\geq$98 oder $\geq$99 Gew.-%, am meisten bevorzugt 100 Gew.-%, jeweils bezogen auf das Gesamtgewicht des Beschichtungsmittels (B1a). Der Festkörpergehalt wird dabei mittels der nachstehend beschriebenen Methode ermittelt.

Vorzugsweise enthält das Beschichtungsmittel (B1a) keine Thiole, insbesondere kein Trimethylolpropantris(3-mercaptopropionat).

Vorzugsweise beträgt der Doppelbindungsumsatz der aus (B1a) erhaltenen zumindest teilweise ausgehärteten Beschichtung (B1) wenigstens 70%, besonders bevorzugt wenigstens 75%, noch bevorzugter wenigstens 80%, ganz besonders bevorzugt wenigstens 85%, insbesondere wenigstens 90%.

*Beschichtungsmittel (B2a)*

Jede Art von Beschichtungsmittel kann als Beschichtungsmittel (B2a) in Schritt (1) des erfindungsgemäßen Verfahrens eingesetzt werden. Bei dem Beschichtungsmittel (B2a) kann es sich um ein physikalisch trocknendes, thermisch härtbares, chemisch härtbares und/oder strahlenhärtbares Beschichtungsmittel (B2a) handeln. Vorzugsweise ist das Beschichtungsmittel (B2a) ein chemisch härtbares, ein thermisch härtbares und/oder strahlenhärtbares Beschichtungsmittel, besonders bevorzugt ein strahlenhärtbares Beschichtungsmittel. Demzufolge erfolgt die zumindest teilweise Aushärtung gemäß Schritt (3) vorzugsweise mittels Strahlenhärtung. Das Beschichtungsmittel (B2a) kann identisch zum Beschichtungsmittel (B1a) sein. Vorzugsweise ist (B2a) jedoch verschieden von (B1a). (B2a) ist vorzugsweise aus den gleichen, aber nicht denselben, Komponenten (a) bis (e) aufgebaut, die auch zur Herstellung von (B1a) eingesetzt werden, wobei die Mengenvorgaben betreffend (B1a) jedoch nicht für (B2a) zutreffen müssen.

Unter einer physikalischen Trocknung wird dabei vorzugsweise das einfache Abdunsten von Lösungsmittel(n) unter Ausbildung der Beschichtung (B2) verstanden. Eine thermische Härtung sieht dabei vorzugsweise einen Härtungsmechanismus vor, der auf eine Temperatur oberhalb von Raumtemperatur (>23°C) zurückzuführen ist. Dies kann beispielsweise die Bildung von Radikalen oder Ionen, bevorzugt Radikalen aus einem Initiator sein, der bei den erhöhten Temperaturen zerfällt und so eine radikalische bzw. ionische Polymerisation startet. Beispiele für solche thermisch aktivierbare Initiatoren sind solche, die eine Halbwertszeit bei 80°C von weniger als 100 Stunden aufweisen. Unter einer

chemischen Härtung wird vorzugsweise die Reaktion wenigstens zweier unterschiedlicher und zueinander komplementärer reaktiver funktioneller Gruppen verstanden, beispielsweise im Sinne einer Polykondensation wie einer Reaktion einer -OH-Gruppe mit einer -COOH-Gruppe, oder im Sinne einer Polyaddition (Reaktion einer NCO-Gruppe mit einer -OH- oder Amino-Gruppe).

Ist das Beschichtungsmittel (B2a) ein physikalisch trocknendes, thermisch härtbares und/oder chemisch härtbares Beschichtungsmittels, so wird zu seiner Herstellung wenigstens ein übliches und dem Fachmann bekanntes Polymer als Bindemittel eingesetzt. Dieses weist dann vorzugsweise vernetzbare funktionelle Gruppen auf. Jede übliche dem Fachmann bekannte vernetzbare funktionelle Gruppe kommt dabei in Betracht. Insbesondere sind die vernetzbaren funktionellen Gruppen ausgewählt aus der Gruppe bestehend aus Hydroxyl-Gruppen, Amino-Gruppen, Carbonsäure-Gruppen, Isocyanaten, Polyisocyanaten und Epoxiden. Die Polymere sind vorzugsweise exotherm oder endotherm vernetzbar bzw. härtbar, vorzugsweise in einem Temperaturbereich von -20°C bis zu 250°C, oder von 18°C bis 200°C, vernetzbar bzw. härtbar. Als Polymere eignet sich insbesondere wenigstens ein Polymer ausgewählt aus der Gruppe bestehend aus Polyurethanen, Polyethern, Polyestern, Polyamiden, Polyharnstoffen, Polyvinylchloriden, Polystyrolen, Polycarbonaten, Poly(meth)acrylaten, Epoxidharzen, Phenol-Formaldehydharzen, Melamin-Formaldehydharzen. Die Polymere können dabei insbesondere OHfunktionell sein. In diesem Fall können sie unter den allgemeinen Begriff "Polyole" subsumiert werden. Bei solchen Polyolen kann es sich beispielsweise um Polyacrylatpolyole, Polyester-polyole, Polyetherpolyole, Polyurethanpolyole, Polyhamstoffpolyole, Polyesterpolyacrylatpolyole, Polyesterpolyurethanpolyole, Polyurethanpolyacrylatpolyole, polyurethanmodifizierte Alkydharze, Fettsäuremodifizierte Polyesterpolyurethanpolyole sowie Mischungen der genannten Polyole handeln. Bevorzugt sind Polyacrylatpolyole, Polyesterpolyole und Polyetherpolyole.

Es kann dabei wenigstens ein Polymer eingesetzt werden, welches unter Beteiligung von Isocyanat und/oder oligomerisierten Isocyanat-Gruppen ausgehärtet wird, ganz besonders bevorzugt wenigstens ein entsprechendes Polyurethan und/oder wenigstens ein entsprechender Polyharnstoff (z.B. sogenannte "Polyaspartic-Bindemittel"). Bei Polyaspartic-Bindemitteln handelt es sich um Komponenten, die aus Reaktion von aminofunktionellen Verbindungen, insbesondere sekundären Aminen, mit Isocyanaten umgesetzt werden. Wird wenigstens ein Polyurethan eingesetzt, so eignen sich insbesondere Polyurethan-basierte Harze, die durch eine Polyadditionsreaktion zwischen hydroxylgruppenhaltigen Komponenten wie Polyolen und wenigstens einem Polyisocyanat (aromatische und aliphatische Isocyanate, Di-, Tri- und/oder Polyisocyanate) herstellbar sind. Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Werden Epoxidharze, d.h. Epoxidbasierte Harze eingesetzt, so eignen sich vorzugsweise solche Epoxid-basierten Harze, die aus Glycidylethern hergestellt werden, welche endständige Epoxidgruppen und innerhalb des Moleküls Hydroxylgruppen als funktionelle Gruppen aufweisen. Vorzugsweise sind diese Umsetzungsprodukte von Bisphenol A und Epichlorhydrin bzw. Bisphenol F mit Epichlorhydrin und Mischungen davon, welche auch in Gegenwart von Reaktivverdünnern) eingesetzt werden. Die Härtung bzw. Vernetzung derartiger Epoxid-basierter Harze erfolgt üblicherweise durch eine Polymerisation der Epoxidgruppen des Epoxidringes, durch eine Polyadditionsreaktion in Form einer Anlagerung anderer reaktiver Verbindungen als Härter in stöchiometrischen Mengen an die Epoxidgruppen, wobei dementsprechend pro Epoxidgruppe die Gegenwart eines aktiven Wasserstoffäquivalents erforderlich ist (d.h. pro Epoxid-Äquivalent zur Aushärtung ein H-aktives-Äquivalent benötigt wird), oder durch eine Polykondensation über die Epoxid- und die Hydroxylgruppen. Geeignete Härter sind beispielsweise Polyamine, insbesondere (hetero)aliphatische, (hetero)aromatische und (hetero) cycloaliphatische Polyamine, Polyamidoamine, Polyaminoamide sowie Polycarbonsäuren und ihre Anhydride.

Der Begriff der "Strahlenhärtung" ist bereits vorstehend im Zusammenhang mit dem Beschichtungsmittel (B1a) beschrieben worden. Das Beschichtungsmittel (B2a) kann durch Einsatz einer Strahlenquelle gehärtet werden, vorzugsweise durch Einsatz von UV-Strahlung. Somit ist (B2a) vorzugsweise ein UV-Strahlen-härtendes Beschichtungsmittel.

Vorzugsweise weist (B2a) daher ungesättigte Kohlenstoff-Doppelbindungen auf, besonders bevorzugt (Meth)acryl-Gruppen. Zu diesem Zweck kann das Beschichtungsmittel (B2) jede der vorstehend im Zusammenhang mit (B1a) genannten und unter die Komponenten (a) und (d) von (B1a) subsumierbaren Komponenten enthalten, wie insbesondere Polyester-, Polyether-, Carbonat-, Epoxid-, Poly(meth)acrylat- und/oder Urethan-(Meth)acrylate und/oder wenigstens ein ungesättigtes Polyesterharz und/oder mono-, di-, und/oder tri-funktionelle (Meth)acrylsäureester.

Bei Härtung mit Hilfe von (N)IR- und/oder UV-Licht enthält das Beschichtungsmittel (B2a) vorzugsweise wenigstens einen Photoinitiator, der durch Licht der eingestrahlten Wellenlänge zu Radikalen zersetzt werden kann, die ihrerseits eine radikalische Polymerisation starten können. Bei Härtung mit Elektronenstrahlung ist die Anwesenheit solcher Photoinitiatoren dagegen nicht erforderlich. Als Photoinitiatoren können die gleichen Komponenten in den gleichen Mengen eingesetzt werden, die vorstehend im Zusammenhang mit Komponente (c) des Beschichtungsmittels (B1a) genannt worden sind.

Das Beschichtungsmittel (B2a) kann zudem wenigstens ein weiteres Additiv enthalten. Dabei können die gleichen Komponenten in den gleichen Mengen eingesetzt werden, die vorstehend im Zusammenhang mit den Komponenten

(b) und (e) des Beschichtungsmittels (B1a) genannt worden sind.

Besonders bevorzugt wird als Beschichtungsmittel (B2a) ein Beschichtungsmittel eingesetzt, welches (Meth)acryl-Gruppen aufweist. Vorzugsweise enthält dieses Beschichtungsmittel (B2a) wenigstens ein Urethan(meth)acrylat. Vorzugsweise enthält es zudem wenigstens einen Photoinitiator.

*Erfindungsgemäßer Verbund (B2B1F1)*

Ein weiterer Gegenstand der vorliegenden Erfindung ist zudem ein Verbund (B2B1F1) aus einem Substrat (F1), einer zumindest teilweise geprägten und zumindest teilweise ausgehärteten Beschichtung (B1) und einer auf (B1) applizierten und zumindest teilweise ausgehärteten Beschichtung (B2), wobei die Beschichtung (B1) herstellbar ist durch zumindest teilweises Aushärten eines auf wenigstens einen Teil einer Oberfläche des Substrats (F1) applizierten und zumindest teilweise geprägten Beschichtungsmittels (B1a) durch Strahlenhärtung, wobei das Beschichtungsmittel (B1a) ein strahlenhärtbares Beschichtungsmittel ist,
dadurch gekennzeichnet, dass das Beschichtungsmittel (B1a)

wenigstens eine Komponente (a) in einer Menge in einem Bereich von 40 bis 95 Gew.-%,
wenigstens ein Additiv als Komponente (b) in einer Menge in einem Bereich von 0,01 bis 5 Gew.-%,
wenigstens einen Photoinitiator als Komponente (c) in einer Menge in einem Bereich von 0,01 bis 15 Gew.-%, und
wenigstens eine mindestens eine Kohlenstoffdoppelbindung aufweisende Komponente (d) in einer Menge in einem Bereich von 0 bis 45 Gew.-% enthält,
wobei (i) die Komponenten (a), (b), (c) und (d) jeweils voneinander verschieden sind, (ii) sich die angegebenen Mengen der Komponenten (a), (b), (c) und (d) jeweils auf das Gesamtgewicht des Beschichtungsmittels (B1a) beziehen und (iii) sich die Mengen aller im Beschichtungsmittel (B1a) enthaltenen Komponenten auf 100 Gew.-% addieren,
und wobei Komponente (a) wenigstens drei jeweils voneinander verschiedene oder zumindest teilweise identische Struktureinheiten der Formel (I) aufweist

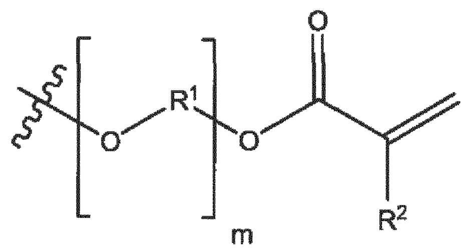

**(I),**

in denen

die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der Komponente (a) der Parameter m mindestens 2 beträgt.

Alle im Zusammenhang mit dem erfindungsgemäßen Verfahren hierin zuvor beschriebene bevorzugte Ausführungsformen, insbesondere im Zusammenhang mit den darin verwendeten Beschichtungsmitteln (B1a) und (B2a), dem Substrat (F1) sowie der Beschichtungen (B1) und (B2), sind auch bevorzugte Ausführungsformen hinsichtlich des erfindungsgemäßen Verbunds (B2B1F1).

Vorzugsweise ist der Verbund (B1F1) dieses Verbunds (B2B1F1) mittels Durchführung der vorstehend beschriebenen Verfahrensschritte (4) bis (7) erhältlich.

Vorzugsweise ist der Verbund (B2B1F1) mittels Durchführung der vorstehend beschriebenen Verfahrensschritte (1) und (2) erhältlich.

Vorzugsweise handelt es sich bei dem Substrat (F1) um eine Folienbahn, besonders bevorzugt um eine Endlos-Folienbahn.

*Verwendungen*

Ein weiterer Gegenstand der vorliegenden Erfindung ist eine Verwendung des erfindungsgemäßen Verbunds (B2B1F1) zur Herstellung einer auf einer ihrer Oberflächen zumindest teilweise geprägten Beschichtung (B2) in Form eines freien Films oder zur Herstellung eines Verbunds (B2KF2) aus einem Substrat (F2), wenigstens eines Klebstoffs (K) und der Beschichtung (B2). Der Verbund (B2KF2) wird dabei vorzugsweise mittels Durchlaufen der Verfahrensstufen (3a), (3b) und (3c) erhalten, nämlich durch

(3a) Applizieren eines Klebstoffs (K) auf wenigstens einen Teil der Oberfläche des Verbunds (B2B1F1) auf seiner die Beschichtung (B2) aufweisenden Seite unter Erhalt eines Verbunds (KB2B1F1)
(3b) Aufbringen eines Substrats (F2) auf den nach Stufe (3a) erhaltenen Verbund (KB2B1F1) auf wenigstens einen Teil seiner den Klebstoff (K) aufweisenden Oberfläche oder umgekehrt unter Erhalt eines Verbunds (F2KB2B1F1) und
(3c) Abziehen des Verbunds (B1F1) von dem Verbund (F2KB2B1F1) unter Erhalt eines Verbunds (F2KB2), wobei die Beschichtung (B2) dieses Verbunds auf ihrer Oberfläche zumindest teilweise das Spiegelbild der zumindest teilweise geprägten Oberfläche der Beschichtung (B1) des Verbunds (B1F1) aufweist.

Alle im Zusammenhang mit dem erfindungsgemäßen Verfahren und dem erfindungsgemäßen Verbund (F1B1) und (B2B1F1) hierin zuvor beschriebene bevorzugte Ausführungsformen sind auch bevorzugte Ausführungsformen hinsichtlich der vorgenannten Verwendungen.
Vorzugsweise ist das Beschichtungsmittel (B2a) dabei ein strahlenhärtbares Beschichtungsmittel.

**Bestimmungsmethoden**

1. Bestimmung des nicht-flüchtigen Anteils

Die Bestimmung des nicht-flüchtigen Anteils (des Festkörpers bzw. Festkörperanteil bzw. Festkörpergehalts) erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

2. Bestimmung der Abformgenauigkeit

Die Bestimmung der Abformgenauigkeit erfolgt mittels eines handelsüblichen Rasterkraftmikroskops (AFM) unter Verwendung eines handelsüblichen Cantilevers. Mittels AFM kann so zum Beispiel die Oberflächentopographie von einer bestimmten Gitterstruktur wie die des Prägewerkzeugs P1 mit einer Tiefe von beispielsweise 140 nm und einer Periode von beispielsweise 430 nm mit der Oberflächentopographie einer Masterfolie (B1F1) nach Prägung verglichen werden. Das Prägewerkzeug wird in diesem Fall absichtlich an einer bestimmten Stelle beschädigt, um so einen Bezugspunkt zu definieren. Durch diesen Bezugspunkt können die jeweils gleichen Bereiche der Referenz und der Replikation untersucht und miteinander verglichen werden. Die Abformgenauigkeit definiert dabei, wie genau eine bestimmte Referenzstruktur transferiert werden kann, wie zum Beispiel vom Prägewerkzeug P1 auf eine Masterfolie (B1F1). Wenn beispielsweise der untersuchte Bereich des Prägewerkzeugs P1 eine Gitterstruktur mit einer Tiefe von 140 nm aufweist, wird diese Referenztiefe dann verglichen mit der entsprechenden Höhe der Struktur, die an der Masterfolie (B1F1) bestimmt wird. Die prozentuale Änderung, die dabei der Abformgenauigkeit entspricht, wird dabei definiert als:

$$\Delta h = 100 * (1 - \frac{h_m}{h_r})$$

$\Delta h$ entspricht hier der prozentualen Änderung, $h_m$ der Höhe der Struktur des untersuchten Bereichs der Masterfolie und $h_r$ der entsprechenden Tiefe der Struktur des untersuchten Bereichs des Prägewerkzeugs. Diese prozentuale Änderung, also die Abformgenauigkeit, wird auch als 'Schrumpf' bezeichnet. Je geringer die Werte für $\Delta h$ sind, desto besser ist die Abformgenauigkeit.

**3.** Bestimmung der Auslaufzeit

Die Bestimmung der Auslaufzeit erfolgt gemäß DIN EN ISO 2431 (Datum: März 2012). Dabei wird die Auslaufzeit mittels eines 4-mm-Auslaufbechers (Nr. 4) bei Raumtemperatur (20°C) bestimmt.

**4.** Bestimmung des Doppelbindungsumsatzes

Der Doppelbindungsumsatz (DB-Umsatz) wird nach Aushärtung der untersuchten Probe mittels ATR-IR-Spektroskopie bestimmt. Bei der Methode der ATR-IR-Spektroskopie wird an der Kontaktstelle eines runden Reflexionskristalls mit dem Substrat ein IR-Spektrum aufgenommen. Die Kontaktstelle hat einem Durchmesser von ca. 200 μm und als Reflexionskristall wird ein Germaniumkristall eingesetzt.

Als Ausgangsmaterial zur Berechnung des Doppelbindungsumsatzes werden die entsprechenden Nassmuster der Probe verwendet. Berechnet wird der DB-Umsatz über die Intensitätsabnahme der Bande bei 810 $cm^{-1}$. Als Normierungsbande wird eine Esterbande bei 1730 $cm^{-1}$ zugrunde gelegt. Der prozentuale Doppelbindungsumsatz wird berechnet mit folgender Formel:

$$DB - Umsatzes = 100 * (1 - \frac{I_{810cm-1}}{I_{Ref-810cm-1}})$$

Dabei ist $I_{810cm-1}$ die normierte Intensität bei 810$cm^{-1}$ der ausgehärteten Schicht und $I_{Ref-810cm-1}$ die normierte Intensität bei 810 $cm^{-1}$ ist von dem entsprechenden Nassmuster. Ein Doppelbildungsumsatz ≤90% wird als ausreichend eingestuft.

**5.** Bestimmung der Haftung

Die Bestimmung der Haftung erfolgt gemäß DIN EN ISO 2409 (Datum: Juni 2013) mittels der Gitterschnittprüfung. Dabei wird in einer Doppelbestimmung die Haftung der zu untersuchenden Lackschicht zum Substrat geprüft. Es wird ein Gitterschnittprüfer der Firma Byk Gardner mit 2 mm Schnittabstand manuell eingesetzt. Anschließend wird auf die geschädigte Fläche Tesa-Band Nr. 4651 aufgedrückt und abgezogen zur Entfernung des enthafteten Bereiche. Die Beurteilung erfolgt anhand von Kennwerten im Bereich von 0 (geringe Enthaftung) bis 5 (sehr hohe Enthaftung). Ein durchschnittlicher Wert von mindestens 3,5 wird als ausreichend eingestuft.

**6.** Bestimmung des Erfolgs der Replikation

Die Bestimmung der Erfolg der Replikation erfolgt visuell, wobei der prozentuale Anteil der erfolgreich replizierten Fläche bestimmt wird. Der Bereich liegt dabei zwischen 0% bis 100% erfolgreich replizierter Flache. Falls nicht 100% der Fläche repliziert ist, bedeutet dies, dass ein entsprechender Anteil der Fläche nicht von der Prägematrize entfernt werden konnten, d.h. dass die Beschichtung B1 in Form von B1F1 teilweise auf dem Prägewerkzeug P1, oder dass die Beschichtung B2 teilweise auf der Masterfolie B1F1 haften geblieben ist.

**Beispiele und Vergleichsbeispiele**

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

**1.** Eingesetzte Rohstoffe und Materialien

Hostaphan® GN - kommerziell erhältliche PET-Folie mit einer Schichtdicke von 125 μm.

Laromer® UA 9033 (L UA 9033) - aliphatisches Urethanacrylat der Firma BASF SE, einsetzbar als Komponente (d)
Hexandioldiacrylat (HDDA) - einsetzbar als Komponente (d)
Sartomer® 395 (SR 395) - Isodecylacrylat der Firma Sartomer, einsetzbar als Komponente (d)
Sartomer® 502 (SR 502) - 9-fach ethoxyliertes TMPTA (Trimethylpropantriacrylat) der Firma Sartomer, einsetzbar als Komponente (a)
Sartomer® 499 (SR 499) - 6-fach ethoxyliertes TMPTA (Trimethylpropantriacrylat) der Firma Sartomer, einsetzbar als Komponente (a)
Sartomer® 454 (SR 454) - 3-fach ethoxyliertes TMPTA (Trimethylpropantriacrylat) der Firma Sartomer, einsetzbar als Vergleichskomponente (a)
TMPTA (Trimethylpropantriacrylat) - einsetzbar als Vergleichskomponente (a) GPTA (Glyceryl propoxytriacrylat) - 3-fach propoxyliertes Glyceryltriacrylat, einsetzbar als Vergleichskomponente (a)

Irgacure® 184 (I-184) - kommerziell erhältlicher Photoinitiator der Firma BASF SE, einsetzbar als Komponente (c)
Irgacure® TPO-L (I-TPO-L) - kommerziell erhältlicher Photoinitiator der Firma BASF SE, einsetzbar als Komponente (c)
Tego® Rad 2500 (TR 2500) - Gleit- und Antiblocking-Additiv der Firma Evonik (Silikonacrylat), einsetzbar als Komponente (b)
Byk-SILCLEAN 3710 (BS 3710) - Oberflächenadditiv der Firma BYK Chemie GmbH (Polyether modifiziertes Acryl-funktionelles Polydimethylsiloxan), einsetzbar als Komponente (b)

## 2. Beispiele

### 2.1 *Herstellung von Beschichtungsmitteln (B1a) und entsprechenden Vergleichsbeschichtungsmitteln*

Es wurden die Beschichtungsmittel gemäß der nachstehenden Tabellen 1a und 1b hergestellt. Beschichtungsmittel E1a bis E3a sowie E4a bis E6a sind erfindungsgemäß. Beschichtungsmittel V1a bis V5a sind Vergleichsbeschichtungsmittel. Die ermittelten Auslaufzeiten bei Raumtemperatur (20°C) liegen im Fall der Herstellung von E1a bis E3a und V1a bis V5a im Bereich von 26 bis 172 s.

Tabelle 1a:

| *Beschichtungsmittel* | *Komponente (a) oder Vergleichskomponente (a)* | *Komponente (b)* | *Komponente (d)* | *Komponente (c)* |
|---|---|---|---|---|
| E1a | SR 499 (65 Teile) | TR 2500 (1 Teil) | L UA 9033 (13,5 Teile) und HDDA (13,5 Teile) | I-184 (3,5 Teile) und I-TPO-L (3,5 Teile) |
| E2a | SR 499 (92 Teile) | TR 2500 (1 Teil) | - | 1-184 (3,5 Teile) und I-TPO-L (3,5 Teile) |
| E3a | SR 502 (65 Teile) | TR 2500 (1 Teil) | L UA 9033 (13,5 Teile) und HDDA (13,5 Teile) | I-184 (3,5 Teile) und I-TPO (3,5 Teile) |
| V1a | SR 499 (65 Teile) | - | L UA 9033 (13,5 Teile) und HDDA (13,5 Teile) | I-184 (3,5 Teile) und I-TPO-L (3,5 Teile) |
| V2a | SR 454 (65 Teile) | TR 2500 (1 Teil) | L UA 9033 (13,5 Teile) und HDDA (13,5 Teile) | I-184 (3,5 Teile) und I-TPO (3,5 Teile) |
| V3a | TMPTA (50 Teile) | TR 2500 (1 Teil) | L UA 9033 (26 Teile) und SR 395 (16 Teile) | I-184 (3,5 Teile) und I-TPO-L (3,5 Teile) |
| V4a | GPTA (50 Teile) | TR 2500 (1 Teil) | L UA 9033 (26 Teile) und SR 395 (16 Teile) | 1-184 (3,5 Teile) und I-TPO-L (3,5 Teile) |
| V5a | SR 499 (32 Teile) | TR 2500 (1 Teil) | L UA 9033 (30 Teile) und HDDA (30 Teile) | I-184 (3,5 Teile) und I-TPO-L (3,5 Teile) |

Tabelle 1b:

| *Beschichtungsmittel* | *Komponente (a)* | *Komponente (b)* | *Komponente (d)* | *Komponente (c)* |
|---|---|---|---|---|
| E4a | SR 499 (65 Teile) | TR 2500 (0,5 Teil) | L UA 9033 (13,5 Teile) und HDDA (13,5 Teile) | I-184 (3,5 Teile) und I-TPO-L (3,5 Teile) |

(fortgesetzt)

| *Beschichtungsmittel* | *Komponente (a)* | *Komponente (b)* | *Komponente (d)* | *Komponente (c)* |
|---|---|---|---|---|
| E5a | SR 499 (65 Teile) | TR 2500 (2 Teile) | L UA 9033 (13,5 Teile) und HDDA (13,5 Teile) | 1-184 (3,5 Teile) und I-TPO-L (3,5 Teile) |
| E6a | SR 499 (65 Teile) | BS 3710 (1 Teil) | L UA 9033 (13,5 Teile) und HDDA (13,5 Teile) | I-184 (3,5 Teile) und I-TPO-L (3,5 Teile) |

**2.2** *Herstellung von Masterfilmen (B1F1) unter Einsatz von E1a bis E3a und V1a bis V5a sowie von E4a bis E6a*

Mehrere unterschiedliche Masterfolien werden unter Einsatz einer Rolle-zu-Platte Prägevorrichtung mit einem Prägewerkzeug P1 aus Nickel, welches die gewünschte Positivstruktur trägt, hergestellt. Dazu wird jeweils eines der vorstehend beschriebenen Beschichtungsmittel E1a bis E3a und V1a bis V5a sowie E4a bis E6a auf P1 appliziert und darüber eine PET-Folie (F1) aufgebracht (Hostaphan® GN). Der so erhaltene Stack aus Folie und jeweiligem Beschichtungsmittel läuft dann unter einer Anpresswalze hindurch und noch während die Prägevorrichtung in Kontakt mit dem Beschichtungsmittel des jeweiligen Stacks ist, erfolgt die zumindest teilweise Aushärtung der Beschichtungsmittel durch eine UV-LED Lampe. Dabei wird eine 365 nm, 6W UV-LED Lampe von Easytec (100% Lampenleistung, 2 m/min, 2 Durchläufe) eingesetzt. Anschließend wird die zumindest teilweise ausgehärtete Beschichtung samt Folie mit der im Vergleich zu P1 Negativstruktur von der Prägevorrichtung getrennt und die strukturierte Folie (Masterfilm) erhalten. Die Masterfilme werden im Anschluss nachbelichtet mit einem UVA-Strahler (Panacol-Elosal UV F-900).

Ferner werden Masterfolien unter Einsatz einer Rolle-zu-Rolle Prägevorrichtung mit einem Prägewerkzeug P1 aus Nickel, welches die gewünschte Positivstruktur trägt, hergestellt. Dazu wird das vorstehend beschriebene Beschichtungsmittel E1a jeweils auf eine PET-Folie (F1) aufgebracht (Hostaphan® GN) und mit Hilfe einer Anpresswalze über das Prägewerkzeug P1 geführt. Noch während die Prägevorrichtung in Kontakt mit dem Beschichtungsmittel ist, erfolgt die zumindest teilweise Aushärtung des Beschichtungsmittels durch eine UV-LED Lampe. Dabei wird eine 365 nm, 6W UV-LED Lampe von Easytec (100% Lampenleistung, 5 m/min) eingesetzt. Anschließend wird die zumindest teilweise ausgehärtete Beschichtung samt Folie mit der im Vergleich zu P1 Negativstruktur von der Prägevorrichtung getrennt und die strukturierte Folie (Masterfilm) erhalten. Der Masterfilm wird im Anschluss nachbelichtet mit einem UVA-Strahler (Panacol-Elosal UV F-900).

**2.3** *Hergestellte Masterfilme*

Auf die unter Punkt **2.2** beschriebene Weise werden verschiedene Sets an Masterfilmen (E1F1 bis E3F1 und V1F1 bis V5F1 sowie E4F1 bis E6F1) erhalten, die sich zudem je nach Art der Positivstruktur in ihrer Prägung unterscheiden. Es wurden hierbei Prägevorrichtungen aus Nickel mit verschiedenen Positivstrukturen eingesetzt, nämlich mit

- einer Nanostruktur (Gitterstruktur mit einer Periode von 430 nm und einer Tiefe von 140 nm,; das jeweilige Beschichtungsmittel wird in Schichtdicken zwischen 5-10 μm auf die eingesetzte PET-Folie appliziert),
- einer Mikrostruktur M1 (Zweidimensionale Dreieck-Struktur mit einer Breite und Höhe von 33 μm und 35 μm Raum zwischen den Strukturen; das jeweilige Beschichtungsmittel wird in Schichtdicken zwischen 20 μm auf die eingesetzte PET-Folie appliziert),
- einer Mikrostruktur A (kontinuierliche zweidimensionale Dreieck-Struktur mit einer Breite von 45 μm und einer Höhe von 13 μm; das jeweilige Beschichtungsmittel wird in Schichtdicken von 20 μm auf die eingesetzte PET-Folie appliziert), oder mit
- einer Mikrostruktur B (zweidimensionale Dreieck-Struktur mit einer Höhe von 80 μm und 115 μm Raum zwischen den Strukturen; das jeweilige Beschichtungsmittel wird in Schichtdicken von 110 μm auf die eingesetzte PET-Folie appliziert).

Die Masterfilme mit der Nanostruktur werden hinsichtlich der Bestimmung der Abformgenauigkeit, der Doppelbindungsumsätze und der Haftung eingesetzt. Die Masterfilme mit der Mikrostruktur M1 werden hinsichtlich der Bestimmung des Erfolgs der Replikation eingesetzt - vgl. Punkt **2.4** - und zudem wie nachstehend unter den Punkten **2.5** bis **2.7** beschrieben zur Herstellung von Transferfilmen eingesetzt. Die Masterfilme mit den Mikrostrukturen A oder B werden wie nachstehend unter Punkt **2.8** beschrieben zur Herstellung von Transferfilmen eingesetzt. Zur Herstellung dieser Masterfilme wird jeweils das Beschichtungsmittel E1a eingesetzt und entsprechend Masterfilme E1F1 mit Mikrostruktur A oder B erhalten.

**2.4** *Untersuchungen an den Masterfilmen*

Nachfolgende Tabelle 2 fasst die erfolgten Untersuchungen zusammen. Die Untersuchungen erfolgten jeweils gemäß den vorstehend beschriebenen Methoden. Das Zeichen "-" bedeutet innerhalb der Tabelle, dass die jeweilige Untersuchung nicht durchgeführt worden ist.

Tab. 2:

| *Masterfilm* | *DB-Umsatz (%)* | *Haftung* | *Erfolg der Replikation (%)* | *Abformgenauigkeit ($\Delta h$, %)* |
|---|---|---|---|---|
| E1F1 | 92 | 3.5 | 100 | 4 |
| E2F1 | 90 | 0.5 | 100 | 4 |
| E3F1 | 95 | 2.5 | - | 4 |
| V1F1 | 93 | 5 | 100 | 3 |
| V2F1 | 85 | 1.5 | 85 | 2 |
| V3F1 | 89 | 5 | 85 | 5 |
| V4F1 | 92 | 5 | 100 | 4 |
| V5F1 | 87 | 5 | 85 | 29 |

Die Daten zeigen, dass im Fall von V2F1, V3F1 und V5F1 kein ausreichender DB-Umsatz erzielt wird (DB-Umsatz < 90). Bei einem zu geringen DB-Umsatz können Probleme beim Prägen sowohl des Beschichtungsmittels (B1a) als auch später des Beschichtungsmittels (B2a) auftreten. Die Masterfilme E1F1, E2F1 und E3F1 zeigen dagegen DB-Umsätze von mindestens 90%.

Im Fall von V1F1 und V4F1 sind die DB-Umsätze zwar >90%, jedoch wird mittels diesen Masterfilmen genau wie mit V3F1 und V5F1 keine ausreichende Haftung erzielt (Bewertung der Gitterschnittprüfung mit der Note 5). Bei einer zu geringen Haftung des Masterlacks auf der PET-Folie können Probleme beim Prägen sowohl des Beschichtungsmittels (B1a) als auch später des Beschichtungsmittels (B2a) auftreten. Die Masterfilme E1F1, E2F1 und E3F1 zeigen dagegen allesamt gute bis ausreichende Haftungseigenschaften.

Die Daten zeigen zudem, dass im Fall von V2F1, V3F1 und V5F1 nur Werte von 85% bei der Beurteilung des Erfolgs der Replikation erhalten werden, da 15% der jeweiligen Beschichtung V2, V3 bzw. V5 nicht vom Prägewerkzeug entfernt werden konnten. Die untersuchten Masterfilme E1F1 und E2F1 zeigen dagegen einen Replikationserfolg von 100%.

Bis auf V5F1 zeigen alle untersuchten Masterfilme eine ausreichende Abformgenauigkeit, da durchweg sehr geringe Werte des Schrumpfs erhalten werden. Nur im Fall von V5F1 wird ein Schrumpf von 29% erhalten, was inakzeptabel ist.

Zusammenfassend ist festzustellen, dass nur die Masterfilme E1F1, E2F1 und E3F1 gute Ergebnisse in Bezug auf alle untersuchten Eigenschaften liefern (DB-Umsatz, Haftung, Abformgenauigkeit und Erfolg der Replikation).

**2.5** *Herstellung von Transferfilmen:*

Die jeweils erhaltenen Masterfilme mit der Mikrostruktur werden dann jeweils in einer Rolle-zu-Platte Prägevorrichtung eingesetzt und ein Beschichtungsmittel (B2a) wird mit einer Nassschichtdicke von 20 $\mu$m auf die strukturierte Oberfläche des jeweiligen Masterfilms aufgebracht. Der so erhaltene Stack aus Masterfolie und Beschichtungsmittel (B2a) wird mittels einer TAC-Folie zum Schutz vor Sauerstoff abgedeckt. Der wiederum so erhaltene Stack aus Masterfolie, darauf aufgebrachtem Beschichtungsmittel (B2a) und darauf aufgebrachter TAC-Folie läuft dann unter einer Anpresswalze hindurch es erfolgt simultan die zumindest teilweise Aushärtung des Beschichtungsmittels (B2a) durch eine UV-LED Lampe. Dabei wird eine 365 nm, 6W UV-LED Lampe von Easytec (100% Lampenleistung, 2 m/min, 2 Durchläufe) eingesetzt. Es wird so nach Abziehen der TAC-Folie als ein Stack ein Verbund (B2B1F1) als Transferfilm erhalten.

Das eingesetzte Beschichtungsmittel (B2a) ist ein handelsübliches strahlenhärtendes Beschichtungsmittel, welches mindestens ein Urethanacrylat mindestens einen Photoinitiator sowie handelsübliche Additive enthält.

**2.6** *Herstellung von verklebten Verbünden und freien strukturierten Filmen:*

Anschließend wird die unstrukturierte, beschichtete Seite der Beschichtung (B2) des Transferfilms (B2B1 F1)

mittels einer Kaschierfolie (Mount-Kaschierfolie S-4705 WSA 120P der Firma ATP, Polyacrylat) auf ein beschichtetes Stahlblech geklebt. Die eingesetzte Kaschierfolie besteht aus einer Klebefolie K, die beidseitig zum Schutz vor ungewolltem Verkleben zunächst jeweils mit einem Silikonpapier bedeckt ist. Hierzu wird zunächst das Silikonpapier von einer der Seiten abgezogen und parallel zur Abziehrichtung des Silikonpapiers die Klebefolie mit ihrer nun frei liegenden Klebeseite auf die beschichtete Seite der Beschichtung (B2) des Transferfilms (B2B1 F1) gebracht, in dem die Klebefolie mit einem Gummiroller auf B2 gepresst wird. Anschließend wird analog das Silikonpapier von der anderen Seite abgezogen und parallel zur Abziehrichtung des Silikonpapiers die Klebefolie mit ihrer letzten nun frei liegenden Klebeseite auf eine Oberfläche des Stahlblechs als Substrat F2 mit einem Gummiroller gepresst. Der so erhaltene Verbund (F2KB2B1 F1) wird zunächst bei 50°C für 12 h gelagert. Im Anschluss an diese Lagerung wird der jeweilige Masterfilm (B1F1) vom vorgenannten Verbund abgezogen und dabei neben dem Masterfilm der Verbund (F2KB2) erhalten.

Um einen freien strukturierten Film zu erhalten, kann die Beschichtung (B2) von dem beklebten Stahlblech (F2KB2) getrennt werden.

**2.7** *Untersuchungen an den verklebten Verbünden (F2KB2) oder am freien strukturierten Film (B2)*

Nachfolgende Tabelle 3 fasst die Ergebnisse der Untersuchungen des Erfolgs der Replikation zusammen, die an den erhaltenen Transferfilmen unter Berücksichtigung der jeweils zur Prägung eingesetzten Masterfolie durchgeführt worden sind. Das Zeichen "-" bedeutet innerhalb der Tabelle, dass die jeweilige Untersuchung nicht durchgeführt worden ist.

Tab. 3: Erfolg der Replikation der Prägestruktur

| *Eingesetzter Masterfilm* | *Erfolg der Replikation (%)* |
|---|---|
| E1F1 | 100 |
| E2F1 | 100 |
| E3F1 | 100 |
| E5F1 | 100 |
| E6F1 | 100 |
| V1F1 | 52* |
| V2F1 | 100 |
| V3F1 | 17 |
| V4F1 | <1 |
| V5F1 | 86 |
| * = Mittelwert aus zwei Bestimmungen | |

Die Daten zeigen dass im Fall des Einsatzes von V3F1 und V4F1 eine nur ungenügende Replikation gelingt. Auch im Fall des Einsatzes von V1F1 und V5F1 werden nur Werte <100% bei der Beurteilung des Erfolgs der Replikation erhalten, da Teile der Beschichtung B2 in diesen Fällen nicht von den Beschichtungen V1 bzw. V5 der jeweiligen Masterfilme entfernt werden konnten. Im Fall des Einsatzes der untersuchten Masterfilme E1F1 bis E3F1 und E5F1 und E6F1 wird dagegen ein Replikationserfolg von 100% erzielt.

**2.8** *Herstellung von weiteren Transferfilmen:*

Ein thermisch härtbares Beschichtungsmittel (B2a) wird mit einer Nassschichtdicke von 200 µm auf die strukturierte Oberfläche des jeweiligen Masterfilms E1F1 aufgebracht, welcher eine der Mikrostrukturen A oder B trägt. Die zumindest teilweise Aushärtung des so erhaltenen Stacks aus Masterfolie und Beschichtungsmittel (B2a) erfolgt nach einer Ablüftzeit von 10 Minuten bei Raumtemperatur (23°C) in einem handelsüblichen Ofen der Firma Heraeus bei 80°C Ofentemperatur (45 min). Es wird so als ein Stack ein Verbund (B2B1F1) als Transferfilm erhalten.

Das eingesetzte thermisch härtbare Beschichtungsmittel (B2a) ist ein handelsübliches thermisch härtendes 2K-Beschichtungsmittel. Das Mischungsverhältnis zwischen Komponente 1 und Komponente 2 beträgt 2:1. Komponente 1 enthält mindestens ein Polyol sowie handelsübliche Additive. Komponente 2 enthält mindestens ein Polyisocyanat sowie handelsübliche Additive.

Aus den so erhaltenen Transferfilmen werden mittels der unter Punkt 2.6 beschriebenen Vorgehensweise

verklebte Verbünde (F2KB2) erhalten.

Nachfolgende Tabelle 4 fasst die Ergebnisse der Untersuchungen des Erfolgs der Replikation zusammen, die an den erhaltenen Transferfilmen unter Berücksichtigung der jeweils zur Prägung eingesetzten Masterfolie durchgeführt worden sind.

Tab. 4: Erfolg der Replikation der Prägestruktur

| *Eingesetzter Masterfilm* | *Erfolg der Replikation (%)* |
|---|---|
| E1F1 (mit Mikrostruktur A) | 100 |
| E1F1 (mit Mikrostruktur B) | 100 |

Die Daten zeigen dass im Fall des Einsatzes der untersuchten Masterfilme E1F1 jeweils ein Replikationserfolg von 100% erzielt wird, und zwar auch dann, wenn als Beschichtungsmittel (B2a) ein thermisch härtendes Beschichtungsmittel eingesetzt wird.

**Patentansprüche**

**1.** Ein Verfahren zur Übertragung einer Prägestruktur auf wenigstens einen Teil einer Oberfläche einer zweiten Beschichtung B2 unter Einsatz eines ersten Verbunds F1B1 aus einem ersten Substrat F1 und einer zumindest teilweise geprägten und zumindest teilweise ausgehärteten ersten Beschichtung B1, wobei die zweite Beschichtung B2 und die erste Beschichtung B1 des ersten Verbunds F1B1 zueinander spiegelbildliche Prägestrukturen aufweisen, und wobei das Verfahren wenigstens die Schritte 1) und 2) sowie gegebenenfalls 3) umfasst, nämlich

1) Applizieren eines zweiten Beschichtungsmittels B2a auf wenigstens einen Teil einer zumindest teilweise geprägten Oberfläche eines ersten Verbunds B1F1 aus einem ersten Substrat F1 und einer zumindest teilweise geprägten und zumindest teilweise ausgehärteten ersten Beschichtung B1 unter Erhalt eines zweiten Verbunds B2aB1F1, und
2) zumindest teilweises Aushärten des applizierten zweiten Beschichtungsmittels B2a unter Erhalt eines dritten Verbunds B2B1F1 aus erstem Substrat F1, zumindest teilweise geprägter und zumindest teilweise ausgehärteter erster Beschichtung B1 und zumindest teilweise ausgehärteter zweiter Beschichtung B2 und
3) gegebenenfalls Entfernen der zweiten Beschichtung B2 von dem dritten Verbund B2B1F1 unter Wiedererhalt des in Schritt 1) eingesetzten ersten Verbunds B1F1, wobei die zweite Beschichtung B2 auf ihrer zuvor innerhalb des dritten Verbunds B2B1F1 der ersten Beschichtung B1 zugewandten Oberfläche das Spiegelbild der zumindest teilweise geprägten Oberfläche der ersten Beschichtung B1 des in Schritt 1) eingesetzten und in diesem Schritt wiedererhaltenen ersten Verbunds B1F1 aufweist,

wobei das zur Herstellung der ersten Beschichtung B1 des in Schritt 1) eingesetzten und in Schritt 3) wiedererhaltenen ersten Verbunds B1F1 eingesetzte erste Beschichtungsmittel B1a ein strahlenhärtbares Beschichtungsmittel ist, **dadurch gekennzeichnet, dass** das erste Beschichtungsmittel B1a

wenigstens eine erste Komponente a) in einer Menge in einem Bereich von 40 bis 95 Gew.-%,
wenigstens ein Additiv als zweite Komponente b) in einer Menge in einem Bereich von 0,01 bis 5 Gew.-%,
wenigstens einen Photoinitiator als dritte Komponente c) in einer Menge in einem Bereich von 0,01 bis 15 Gew.-%, und
wenigstens eine mindestens eine Kohlenstoffdoppelbindung aufweisende vierte Komponente d) in einer Menge in einem Bereich von 0 bis 45 Gew.-% enthält,
wobei i) die Komponenten a), b), c) und d) jeweils voneinander verschieden sind, ii) sich die angegebenen Mengen der Komponenten a), b), c) und d) jeweils auf das Gesamtgewicht des ersten Beschichtungsmittels B1a beziehen und iii) sich die Mengen aller im ersten Beschichtungsmittel B1a enthaltenen Komponenten auf 100 Gew.-% addieren,
und wobei die erste Komponente a) wenigstens drei jeweils voneinander verschiedene oder zumindest teilweise identische Struktureinheiten der Formel (I) aufweist

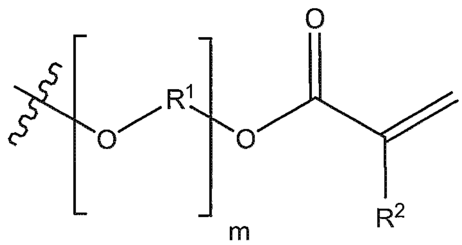

(I),

in denen

die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der ersten Komponente a) der Parameter m mindestens 2 beträgt,

wobei das Symbol

„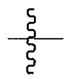“

dabei für eine Bindung des jeweiligen Restes an die übergeordnete Struktur der ersten Komponente a) steht.

2. Das Verfahren gemäß Anspruch 1, **dadurch gekennzeichnet, dass** die zweite Beschichtung B2 in Schritt 3) als freier Film durch ein Abziehen vom dritten Verbund B2B1F1 unter zusätzlichem Wiedererhalt des ersten Verbunds B1F1 erhalten wird.

3. Das Verfahren gemäß Anspruch 1, **dadurch gekennzeichnet, dass** die zweite Beschichtung B2 in Schritt 3) dreistufig durch die Stufen 3a), 3b) und 3c) in Form eines vierten Verbunds B2KF2 erhalten wird, nämlich durch

3a) Applizieren eines Klebstoffs K auf wenigstens einen Teil der Oberfläche des dritten Verbunds B2B1F1 auf seiner die zweite Beschichtung B2 aufweisenden Seite unter Erhalt eines fünften Verbunds KB2B1F1,
3b) Aufbringen eines zweiten Substrats F2 auf den nach Stufe 3a) erhaltenen fünften Verbund KB2B1F1 auf wenigstens einen Teil seiner den Klebstoff K aufweisenden Oberfläche oder umgekehrt unter Erhalt eines sechsten Verbunds F2KB2B1F1 und
3c) Abziehen des ersten Verbunds B1F1 von dem sechsten Verbund F2KB2B1F1 unter Erhalt eines vierten Verbunds F2KB2, wobei die zweite Beschichtung B2 dieses Verbunds auf ihrer Oberfläche zumindest teilweise das Spiegelbild der zumindest teilweise geprägten Oberfläche der ersten Beschichtung B1 des ersten Verbunds B1F1 aufweist.

4. Das Verfahren gemäß Anspruch 3, **dadurch gekennzeichnet, dass** die zweite Beschichtung B2 als freier Film durch Abziehen vom nach Stufe 3c) erhaltenen vierten Verbund F2KB2 erhalten wird.

5. Das Verfahren gemäß einem der vorstehenden Ansprüche, **dadurch gekennzeichnet, dass** die zumindest teilweise geprägte und zumindest teilweise ausgehärtete erste Beschichtung B1 des in Schritt 1) eingesetzten ersten Verbunds F1B1 Prägungen im Mikro- und/oder Nanometerbereich aufweist.

6. Das Verfahren gemäß einem der vorstehenden Ansprüche, **dadurch gekennzeichnet, dass** der in Schritt 1) eingesetzte erste Verbund B1F1 ein Verbund aus einer Folienbahn als erstem Substrat F1 und einer darauf aufgebrachten und zumindest teilweise geprägten und zumindest teilweise ausgehärteten ersten Beschichtung B1 ist.

7. Das Verfahren gemäß einem der vorstehenden Ansprüche, **dadurch gekennzeichnet, dass** der in Schritt 1) eingesetzte und nach Schritt 3) wiedererhaltene erste Verbund B1F1 wiederverwertbar und wiederholt zur Übertragung

wenigstens einer Prägestruktur einsetzbar ist.

**8.** Das Verfahren gemäß einem der vorstehenden Ansprüche, **dadurch gekennzeichnet, dass** der in Schritt 1) eingesetzte erste Verbund F1B1 aus einem ersten Substrat F1 und einer zumindest teilweise geprägten und zumindest teilweise ausgehärteten ersten Beschichtung B1 wenigstens erhältlich ist durch die Schritte 4) bis 7), nämlich

4) Applizieren des strahlenhärtbaren ersten Beschichtungsmittels B1a auf wenigstens einen Teil einer Oberfläche eines ersten Substrats F1,
5) zumindest teilweises Prägen des zumindest teilweise auf die Oberfläche des ersten Substrats F1 applizierten ersten Beschichtungsmittels B1a mittels wenigstens eines wenigstens eine Prägematrize p1 aufweisenden Prägewerkzeugs P1,
6) zumindest teilweises Aushärten des auf wenigstens einen Teil der Oberfläche des ersten Substrats F1 applizierten und zumindest teilweise geprägten ersten Beschichtungsmittels B1a durch Strahlenhärtung unter Erhalt eines ersten Verbunds F1B1 aus erstem Substrat F1 und zumindest teilweise geprägter und zumindest teilweise ausgehärteter erster Beschichtung B1, wobei das erste Beschichtungsmittel B1a während der gesamten Dauer der zumindest teilweisen Aushärtung in Kontakt mit der wenigstens einen Prägematrize p1 des wenigstens einen Prägewerkzeugs P1 ist, und
7) Entfernen des ersten Verbunds F1B1 vom Prägewerkzeug P1.

**9.** Das Verfahren gemäß einem der vorstehenden Ansprüche, **dadurch gekennzeichnet, dass** der Festkörpergehalt des ersten Beschichtungsmittels B1a $\geq$90 Gew.-% ist, bezogen auf das Gesamtgewicht des ersten Beschichtungsmittels B1a.

**10.** Das Verfahren gemäß einem der vorstehenden Ansprüche, **dadurch gekennzeichnet, dass** in jeder der wenigstens drei Struktureinheiten der Formel (I) der ersten Komponente a) der Parameter m mindestens 2 beträgt.

**11.** Das Verfahren gemäß einem der vorstehenden Ansprüche, **dadurch gekennzeichnet, dass** der Anteil der in den Struktureinheiten der Formeln (I) enthaltenen Ethersegmente $-[O-R^1]_m-$ in der ersten Komponente a) wenigstens 35 Gew.-% beträgt, bezogen auf das Gesamtgewicht der ersten Komponente a).

**12.** Ein dritter Verbund B2B1F1 aus einem ersten Substrat F1, einer zumindest teilweise geprägten und zumindest teilweise ausgehärteten ersten Beschichtung B1 und einer auf B1 applizierten und zumindest teilweise ausgehärteten zweiten Beschichtung B2, wobei die erste Beschichtung B1 herstellbar ist durch zumindest teilweises Aushärten eines auf wenigstens einen Teil einer Oberfläche des ersten Substrats F1 applizierten und zumindest teilweise geprägten ersten Beschichtungsmittels B1a durch Strahlenhärtung, wobei das erste Beschichtungsmittel B1a ein strahlenhärtbares Beschichtungsmittel ist,
**dadurch gekennzeichnet, dass** das erste Beschichtungsmittel B1a

wenigstens eine erste Komponente a) in einer Menge in einem Bereich von 40 bis 95 Gew.-%,
wenigstens ein Additiv als zweite Komponente b) in einer Menge in einem Bereich von 0,01 bis 5 Gew.-%,
wenigstens einen Photoinitiator als dritte Komponente c) in einer Menge in einem Bereich von 0,01 bis 15 Gew.-%, und
wenigstens eine mindestens eine Kohlenstoffdoppelbindung aufweisende vierte Komponente d) in einer Menge in einem Bereich von 0 bis 45 Gew.-% enthält,
wobei i) die Komponenten a), b), c) und d) jeweils voneinander verschieden sind, ii) sich die angegebenen Mengen der Komponenten a), b), c) und d) jeweils auf das Gesamtgewicht des ersten Beschichtungsmittels B1a beziehen und iii) sich die Mengen aller im ersten Beschichtungsmittel B1a enthaltenen Komponenten auf 100 Gew.-% addieren,
und wobei die erste Komponente a) wenigstens drei jeweils voneinander verschiedene oder zumindest teilweise identische Struktureinheiten der Formel (I) aufweist

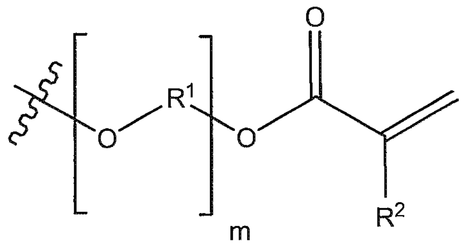

(I),

in denen

die Reste $R^1$ jeweils unabhängig voneinander für eine $C_2$-$C_8$-Alkylengruppe stehen,
die Reste $R^2$ jeweils unabhängig voneinander für H oder Methyl stehen und
die Parameter m jeweils unabhängig voneinander für einen ganzzahligen Parameter in einem Bereich von 1 bis 15 stehen, jedoch mit der Maßgabe, dass in wenigstens einer der Struktureinheiten der Formel (I) innerhalb der ersten Komponente a) der Parameter m mindestens 2 beträgt,

wobei das Symbol

„ 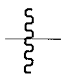 “

dabei für eine Bindung des jeweiligen Restes an die übergeordnete Struktur der ersten Komponente a) steht.

**13.** Der dritte Verbund B2B1F1 gemäß Anspruch 12, **dadurch gekennzeichnet, dass** der erste Verbund B1F1 dieses dritten Verbunds mittels Durchführung der in Anspruch 8 beschriebenen Verfahrensschritte 4) bis 7) erhältlich ist.

**14.** Der dritte Verbund B2B1F1 gemäß Anspruch 12 oder 13, **dadurch gekennzeichnet, dass** dieser mittels Durchführung der in Anspruch 1 beschriebenen Verfahrensschritte 1) und 2) erhältlich ist.

**15.** Eine Verwendung des dritten Verbunds B2B1F1 gemäß einem der Ansprüche 12 bis 13 zur Herstellung einer auf einer ihrer Oberflächen zumindest teilweise geprägten zweiten Beschichtung B2 in Form eines freien Films oder zur Herstellung eines vierten Verbunds B2KF2 aus einem zweiten Substrat F2, wenigstens eines Klebstoffs K und der zweiten Beschichtung B2.

## Claims

**1.** A method for transferring an embossed structure to at least a part of a surface of a second coating B2, using a first composite F1B1 composed of a first substrate F1 and of an at least partially embossed and at least partially cured first coating B1, where the second coating B2 and the first coating B1 of the first composite F1B1 have embossed structures which are mirror images of one another, and where the method comprises at least the steps 1) and 2) and also optionally 3), specifically

1) applying a second coating composition B2a to at least a part of an at least partially embossed surface of a first composite B1F1 composed of a first substrate F1 and of an at least partially embossed and at least partially cured first coating B1, to give a second composite B2aB1F1, and
2) at least partially curing the applied second coating composition B2a to give a third composite B2B1F1 composed of first substrate F1, of at least partially embossed and at least partially cured first coating B1, and of at least partially cured second coating B2, and
3) optionally removing the second coating B2 from the third composite B2B1F1 to restore the first composite B1F1 used in step 1), where the second coating B2, on its surface previously facing the first coating B1 within the third composite B2B1F1, has the mirror image of the at least partially embossed surface of the first coating B1 of the first composite B1F1 used in step 1) and restored in that step,

where the first coating composition B1a used for producing the first coating B1 of the first composite B1F1 used in step 1) and restored in step 3) is a radiation-curable coating composition,
wherein the first coating composition B1a comprises

at least one first component a) in an amount in a range from 40 to 95 wt%,
at least one additive as second component b) in an amount in a range from 0.01 to 5 wt%,
at least one photoinitiator as third component c) in an amount in a range from 0.01 to 15 wt%, and
at least one fourth component d), comprising at least one carbon double bond, in an amount in a range from 0 to 45 wt%,
where i) the components a), b), c), and d) are each different from one another, ii) the stated amounts of the components a), b), c), and d) are each based on the total weight of the first coating composition B1a, and iii) the amounts of all components present in the first coating composition B1a add up to 100 wt%,
and where the first component a) comprises at least three structural units, each different from one another or at least partially identical, of the formula (I)

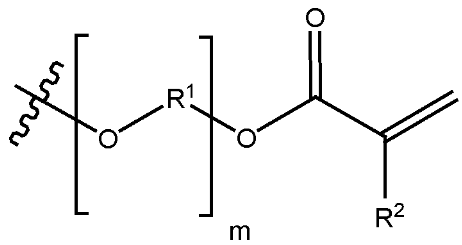

(I),

in which

the radicals $R^1$ in each case independently of one another are a $C_2$-$C_8$ alkylene group,
the radicals $R^2$ in each case independently of one another are H or methyl, and
the parameters m each independently of one another are an integral parameter in a range from 1 to 15, but with the proviso that the parameter m is at least 2 in at least one of the structural units of the formula (I) within the first component a),

where the symbol

" 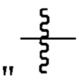 "

stands for a bond of the respective radical to the superordinate structure of the first component a).

2. The method according to claim 1, wherein the second coating B2 in step 3) is obtained as a free film by peeling from the third composite B2B1F1 with additional restoration of the first composite B1F1.

3. The method according to claim 1, wherein the second coating B2 is obtained in step 3) in three stages, through stages 3a), 3b), and 3c), in the form of a fourth composite B2KF2, specifically by

3a) applying an adhesive K to at least a part of the surface of the third composite B2B1F1, on its side having the second coating (B2), to give a fifth composite KB2B1F1,
3b) applying a second substrate F2 to the fifth composite KB2B1F1 obtained after stage 3a), to at least a part of its surface having the adhesive K, or vice-versa, to give a sixth composite F2KB2B1F1, and
3c) peeling the first composite B1F1 from the sixth composite F2KB2B1F1 to give a fourth composite F2KB2, where the second coating B2 of this composite has on its surface at least partially the mirror image of the at least partially embossed surface of the first coating B1 of the first composite B1F1.

4. The method according to claim 3, wherein the second coating B2 is obtained as a free film by peeling from the fourth composite F2KB2 obtained after stage 3c) .

**5.** The method according to any of the preceding claims, wherein the at least partially embossed and at least partially cured first coating B1 of the first composite F1B1 used in step 1) has embossments in the micrometer and/or nanometer range.

**6.** The method according to any of the preceding claims, wherein the first composite B1F1 used in step 1) is a composite composed of a film web as first substrate F1 and of a first coating B1 which is applied thereto and is at least partially embossed and at least partially cured.

**7.** The method according to any of the preceding claims, wherein the first composite B1F1 used in step 1) and restored after step 3) is reusable and can be used repeatedly for transferring at least one embossed structure.

**8.** The method according to any of the preceding claims, wherein the first composite F1B1 which is used in step 1) and which is composed of a first substrate F1 and of an at least partially embossed and at least partially cured first coating B1 is at least obtainable by the steps 4) to 7), specifically

4) applying the radiation-curable first coating composition B1a to at least a part of a surface of a first substrate F1,
5) at least partially embossing the first coating composition B1a, applied at least partially to the surface of the first substrate F1, by means of at least one embossing tool P1 having at least one embossing die p1,
6) at least partially curing the first coating composition B1a, applied to at least a part of the surface of the first substrate F1 and at least partially embossed, by radiation curing, to give a first composite F1B1 composed of first substrate F1 and of at least partially embossed and at least partially cured first coating B1, where throughout the duration of the at least partial curing the first coating composition B1a is in contact with the at least one embossing die p1 of the at least one embossing tool P1, and
7) removing the first composite F1B1 from the embossing tool P1.

**9.** The method according to any of the preceding claims, wherein the solids content of the first coating composition B1a is $\geq$ 90 wt%, based on the total weight of the first coating composition B1a.

**10.** The method according to any of the preceding claims, wherein the parameter m is at least 2 in each of the at least three structural units of the formula (I) of the first component a).

**11.** The method according to any of the preceding claims, wherein the fraction of the ether segments $-[O-R^1]_m-$ present in the structural units of the formulae (I) in the first component a) is at least 35 wt%, based on the total weight of the first component a).

**12.** A third composite B2B1F1 which is composed of a first substrate F1, of an at least partially embossed and at least partially cured first coating B1, and of an at least partially cured second coating B2 applied to B1, where the first coating B1 is producible by at least partially curing a first coating composition B1a, applied to at least a part of a surface of the first substrate F1 and at least partially embossed, by radiation curing, where the first coating composition B1a is a radiation-curable coating composition,
wherein the first coating composition B1a comprises

at least one first component a) in an amount in a range from 40 to 95 wt%,
at least one additive as second component b) in an amount in a range from 0.01 to 5 wt%,
at least one photoinitiator as third component c) in an amount in a range from 0.01 to 15 wt%, and
at least one fourth component d), comprising at least one carbon double bond, in an amount in a range from 0 to 45 wt%,
where i) the components a), b), c), and d) are each different from one another, ii) the stated amounts of the components a), b), c), and d) are each based on the total weight of the first coating composition B1a, and iii) the amounts of all components present in the first coating composition B1a add up to 100 wt%,
and where the first component a) comprises at least three structural units, each different from one another or at least partially identical, of the formula (I)

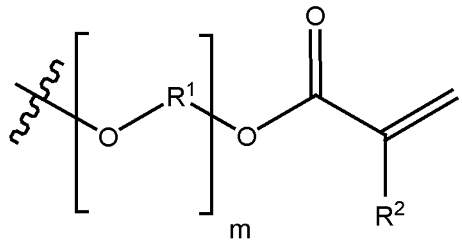

(I),

in which

the radicals $R^1$ in each case independently of one another are a $C_2$-$C_8$ alkylene group,
the radicals $R^2$ in each case independently of one another are H or methyl, and
the parameters m each independently of one another are an integral parameter in a range from 1 to 15, but with the proviso that the parameter m is at least 2 in at least one of the structural units of the formula (I) within the first component a),

where the symbol

„ 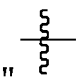 "

stands for a bond of the respective radical to the superordinate structure of the first component a).

**13.** The third composite B2B1F1 according to claim 12, wherein the first composite B1F1 in this third composite is obtainable by implementation of the method steps 4) to 7) described in claim 8.

**14.** The third composite B2B1F1 according to claim 12 or 13, wherein it is obtainable by implementation of the method steps 1) and 2) described in claim 1.

**15.** The use of the third composite B2B1F1 according to either of claims 12 and 13 for producing a second coating B2, embossed at least partially on one of its surfaces, in the form of a free film, or for producing a fourth composite B2KF2 composed of a second substrate F2, at least one adhesive K, and the second coating B2.

**Revendications**

**1.** Procédé pour le transfert d'une structure gaufrée sur au moins une partie d'une surface d'un deuxième revêtement B2 avec utilisation d'un premier composite F1B1 composé d'un premier substrat F1 et d'un premier revêtement B1 au moins partiellement gaufré et au moins partiellement durci, le deuxième revêtement B2 et le premier revêtement B1 du premier composite F1B1 présentant des structures de gaufrage symétriques l'une de l'autre dans un miroir, et le procédé comprenant au moins les étapes 1) et 2) ainsi qu'éventuellement 3), à savoir

1) application d'un deuxième agent de revêtement B2a sur au moins une partie d'une surface au moins partiellement gaufrée d'un premier composite B1F1 composé d'un premier substrat F1 et d'un premier revêtement B1 au moins partiellement gaufré et au moins partiellement durci avec obtention d'un deuxième composite B2aB1F1, et
2) durcissement au moins partiel du deuxième agent de revêtement B2a appliqué avec obtention d'un troisième composite B2B1F1 composé du premier substrat F1, du premier revêtement B1 au moins partiellement gaufré et au moins partiellement durci et du deuxième revêtement B2 au moins partiellement durci et
3) élimination éventuelle du deuxième revêtement B2 du troisième composite B2B1F1 avec récupération du premier composite B1F1 utilisé dans l'étape 1), le deuxième revêtement B2 présentant, sur sa surface orientée précédemment vers le premier revêtement B1 dans le troisième composite B2B1F1, l'image dans un miroir de la surface au moins partiellement gaufrée du premier revêtement B1 du premier composite B1F1 utilisé dans l'étape 1) et récupéré dans cette étape-ci,

le premier agent de revêtement B1a, utilisé pour la préparation du premier revêtement B1 du premier composite B1F1 utilisé dans l'étape 1) et récupéré dans l'étape 3), étant un agent de revêtement durcissable par rayonnement, **caractérisé en ce que** le premier agent de revêtement B1a contient

au moins un premier composant a) en une quantité dans une plage de 40 à 95 % en poids, au moins un additif en tant que deuxième composant b) en une quantité dans une plage de 0,01 à 5 % en poids,
au moins un photoinitiateur en tant que troisième composant c) en une quantité dans une plage de 0,01 à 15 % en poids, et
au moins un quatrième composant d) présentant au moins une double liaison carbonée en une quantité dans une plage de 0 à 45 % en poids, dans lequel i) les composants a), b), c) et d) sont à chaque fois différents les uns des autres, ii) les quantités indiquées des composants a), b), c) et d) se rapportent à chaque fois au poids total du premier agent de revêtement B1a et iii) les quantités de tous les composants contenus dans le premier agent de revêtement B1a s'additionnent pour donner 100 % en poids,
et le premier composant a) présentant au moins trois motifs structuraux à chaque fois différents les uns des autres ou au moins partiellement identiques de formule (I)

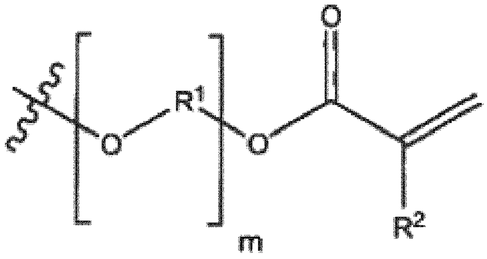

(I),

dans lesquels

les radicaux $R^1$ représentent à chaque fois indépendamment les uns des autres un groupe $C_{2-8}$-alkylène,
les radicaux $R^2$ représentent à chaque fois indépendamment les uns des autres H ou méthyle et
les paramètres m représentent à chaque fois indépendamment les uns des autres un paramètre de nombre entier dans une plage de 1 à 15, toutefois à la condition que dans au moins l'un des motifs structuraux de formule (I) dans le premier composant a) le paramètre m soit au moins 2,

le symbole

« 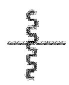 »

représentant ici une liaison du radical respectif à la structure supérieure du premier composant a).

**2.** Procédé selon la revendication 1, **caractérisé en ce que** le deuxième revêtement B2 dans l'étape 3) est obtenu en tant que film libre par retrait du troisième composite B2B1F1 avec récupération supplémentaire du premier composite B1F1.

**3.** Procédé selon la revendication 1, **caractérisé en ce que** le deuxième revêtement B2 dans l'étape 3) est obtenu en trois étapes par les étapes 3a), 3b) et 3c) sous forme d'un quatrième composite B2KF2, à savoir par

3a) application d'un adhésif K sur au moins une partie de la surface du troisième composite B2B1F1 sur sa face présentant le deuxième revêtement B2 avec obtention d'un cinquième composite KB2B1F1,
3b) application d'un deuxième substrat F2 sur le cinquième composite KB2B1F1 obtenu après l'étape 3a) sur au moins une partie de sa surface présentant l'adhésif K ou à l'inverse, avec obtention d'un sixième composite F2KB2B1F1 et
3c) retrait du premier composite B1F1 du sixième composite F2KB2B1F1 avec obtention d'un quatrième composite F2KB2, le deuxième revêtement B2 de ce composite présentant sur sa surface au moins partiellement

l'image dans un miroir de la surface au moins partiellement gaufrée du premier revêtement B1 du premier composite B1F1.

**4.** Procédé selon la revendication 3, **caractérisé en ce que** le deuxième revêtement B2 est obtenu en tant que film libre par retrait du quatrième composite F2KB2 obtenu après l'étape 3c).

**5.** Procédé selon l'une quelconque des revendications précédentes, **caractérisé en ce que** le premier revêtement B1 au moins partiellement gaufré et au moins partiellement durci du premier composite F1B1 utilisé dans l'étape 1) présente des gaufrages d'ordre de grandeur micrométrique et/ou nanométrique.

**6.** Procédé selon l'une quelconque des revendications précédentes, **caractérisé en ce que** le premier composite B1F1 utilisé dans l'étape 1) est un composite composé d'une bande de feuille comme premier substrat F1 et d'un premier revêtement B1 appliqué sur celle-ci et au moins partiellement gaufré et au moins partiellement durci.

**7.** Procédé selon l'une quelconque des revendications précédentes, **caractérisé en ce que** le premier composite B1F1 utilisé dans l'étape 1) et récupéré après l'étape 3) est réutilisable et peut être utilisé à nouveau pour le transfert d'au moins une structure de gaufrage.

**8.** Procédé selon l'une quelconque des revendications précédentes, **caractérisé en ce que** le premier composite F1B1 utilisé dans l'étape 1), composé d'un premier substrat F1 et d'un premier revêtement B1 au moins partiellement gaufré et au moins partiellement durci, peut au moins être obtenu par les étapes 4) à 7), à savoir

4) application du premier agent de revêtement B1a durcissable par rayonnement sur au moins une partie d'une surface d'un premier substrat F1,
5) gaufrage au moins partiel du premier agent de revêtement B1a appliqué au moins partiellement sur la surface du premier substrat F1, au moyen d'au moins un outil de gaufrage P1 présentant au moins une matrice de gaufrage p1,
6) durcissement au moins partiel du premier agent de revêtement B1a appliqué sur au moins une partie de la surface du premier substrat F1 et au moins partiellement gaufré, par durcissement par rayonnement avec obtention d'un premier composite F1B1 composé du premier substrat F1 et du premier revêtement B1 au moins partiellement gaufré et au moins partiellement durci, le premier agent de revêtement B1a, pendant la durée totale du durcissement au moins partiel, étant en contact avec l'au moins une matrice de gaufrage p1 de l'au moins un outil de gaufrage P1, et
7) élimination du premier composite F1B1 de l'outil de gaufrage P1.

**9.** Procédé selon l'une quelconque des revendications précédentes, **caractérisé en ce que** la teneur en solides du premier agent de revêtement B1a est ≥ 90 % en poids, par rapport au poids total du premier agent de revêtement B1a.

**10.** Procédé selon l'une quelconque des revendications précédentes, **caractérisé en ce que** dans chacun des au moins trois motifs structuraux de formule (I) du premier composant a), le paramètre m est au moins 2.

**11.** Procédé selon l'une quelconque des revendications précédentes, **caractérisé en ce que** la proportion des segments éther $-[O-R^1]_m-$ contenus dans les motifs structuraux de formule (I) dans le premier composant a) est d'au moins 35 % en poids, par rapport au poids total du premier composant a).

**12.** Troisième composite B2B1F1 composé d'un premier substrat F1, d'un premier revêtement B1 au moins partiellement gaufré et au moins partiellement durci et d'un deuxième revêtement B2 appliqué sur B1 et au moins partiellement durci, le premier revêtement B1 pouvant être préparé par durcissement au moins partiel d'un premier agent de revêtement B1a appliqué sur au moins une partie d'une surface du premier substrat F1 et au moins partiellement gaufré, par durcissement par rayonnement, le premier agent de revêtement B1a étant un agent de revêtement durcissable par rayonnement,
**caractérisé en ce que** le premier agent de revêtement B1a contient

au moins un premier composant a) en une quantité dans une plage de 40 à 95 % en poids, au moins un additif en tant que deuxième composant b) en une quantité dans une plage de 0,01 à 5 % en poids,
au moins un photoinitiateur en tant que troisième composant c) en une quantité dans une plage de 0,01 à 15 % en poids, et
au moins un quatrième composant d) présentant au moins une double liaison carbonée en une quantité dans

une plage de 0 à 45 % en poids,
dans lequel i) les composants a), b), c) et d) sont à chaque fois différents les uns des autres, ii) les quantités indiquées des composants a), b), c) et d) se rapportent à chaque fois au poids total du premier agent de revêtement B1a et iii) les quantités de tous les composants contenus dans le premier agent de revêtement B1a s'additionnent pour donner 100 % en poids,
et le premier composant a) présentant au moins trois motifs structuraux à chaque fois différents les uns des autres ou au moins partiellement identiques de formule (I)

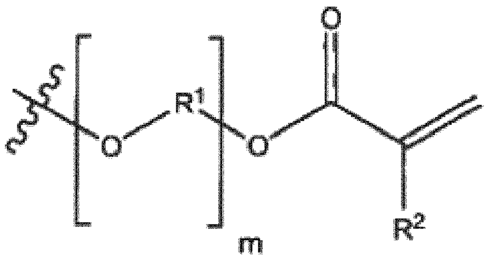

(I),

dans lesquels

les radicaux $R^1$ représentent à chaque fois indépendamment les uns des autres un groupe $C_{2-8}$-alkylène, les radicaux $R^2$ représentent à chaque fois indépendamment les uns des autres H ou méthyle et les paramètres m représentent à chaque fois indépendamment les uns des autres un paramètre de nombre entier dans une plage de 1 à 15, toutefois à la condition que dans au moins l'un des motifs structuraux de formule (I) dans le premier composant a) le paramètre m soit au moins 2,

le symbole

« 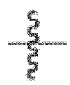 »

représentant ici une liaison du radical respectif à la structure supérieure du premier composant a).

**13.** Troisième composite B2B1F1 selon la revendication 12, **caractérisé en ce que** le premier composite B1F1 de ce troisième composite peut être obtenu par la mise en œuvre des étapes de procédé 4) à 7) décrites dans la revendication 8.

**14.** Troisième composite B2B1F1 selon la revendication 12 ou la revendication 13, **caractérisé en ce que** celui-ci peut être obtenu par la mise en œuvre des étapes de procédé 1) et 2) décrites dans la revendication 1.

**15.** Utilisation du troisième composite B2B1F1 selon l'une quelconque des revendications 12 et 13 pour la préparation d'un deuxième revêtement B2 gaufré au moins partiellement sur l'une de ses surfaces sous forme d'un film libre ou pour la préparation d'un quatrième composite B2KF2 composé d'un deuxième substrat F2, d'au moins un adhésif K et du deuxième revêtement B2.

Fig. 1

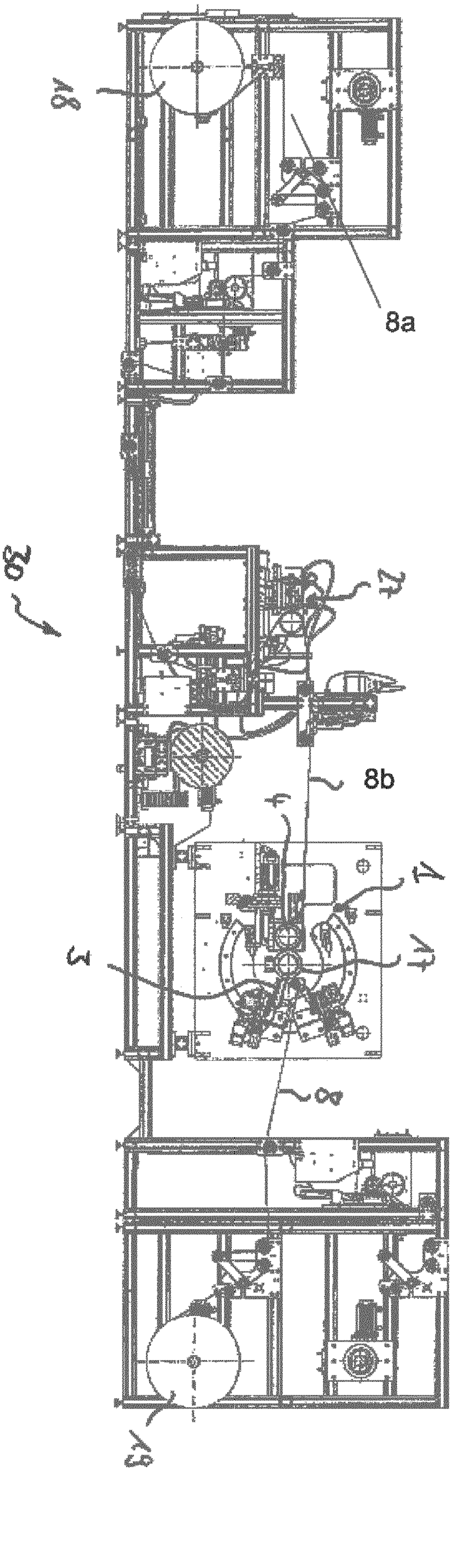

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1304235 A1
- DE 102005017170 A1
- US 20070218255 A1
- US 20100279075 A1
- WO 2015154866 A1
- DE 102007062123 A1
- US 2016082688 A1
- US 2015166704 A1
- EP 2146805 B1
- WO 2016090395 A1
- EP 0092269 A1


### In der Beschreibung aufgeführte Nicht-Patentliteratur


- *ACS Nano Journal,* 2016, vol. 10, 4926-4941
- Lacke und Druckfarben. Römpp Lexikon. Thieme Verlag, 1998, 13
- Lacke und Druckfarben. Römpp Lexikon. Thieme Verlag, 1998, 497
- Lacke und Druckfarben. Römpp Lexikon. Thieme Verlag, 1998